# EUROPEAN PATENT SPECIFICATION

(11) **EP 1 790 690 B1**
(45) Date of publication and mention of the grant of the patent: **30.11.2011**
(21) Application number: 05780865.1
(22) Date of filing: 29.08.2005
(51) Int. Cl.: C08L 45/00, C08L 23/08, C08L 23/16, C08L 53/02, C08L 25/10, C08L 65/00, C08K 5/00

(54) **MOLDED ARTICLE FOR CLEAN ROOM AND METHOD FOR PRODUCING SAME**
FORMKÖRPER FÜR REINRAUM UND HERSTELLUNGSVERFAHREN DAFÜR
ARTICLE MOULÉ POUR SALLE BLANCHE ET SON PROCÉDÉ DE PRODUCTION

(30) Priority: 30.08.2004 JP 2004249612
(43) Date of publication of application: 30.05.2007
(73) Proprietor: Mitsui Chemicals, Inc., Tokyo 105-7117 (JP)
(72) Inventor: SAKAMOTO, Takaki, Oda-gun, Okayama 7141298 (JP); SHIRAGA, Jun, Oda-gun, Okayama 7141298 (JP); KONNAI, Noriyuki, Oda-gun, Okayama 7141298 (JP); KOBAYASHI, Takayuki, Oda-gun, Okayama 7141298 (JP); KANEKO, Kozuyoshi c/o Mitsui Chemicals, Inc., Chiba 2990265 (JP); HIROSE, Toshiyuki, Sodegaura-shi, Chiba 2990265 (JP); NAKANISHI, Keita, Osaka Gas Chemicals Co., Ltd., Osaka-shi, Osaka 541-0051 (JP); NAGAI, Hiroaki, Osaka-shi, Osaka 541-0051 (JP)
(74) Representative: Benson, John Everett
(86) International application number: PCT/JP2005/015614
(87) International publication number: WO 2006/025294

(56) References cited:
- EP-A- 0 361 909
- JP-A- 2 167 318
- JP-A- 4 170 453
- JP-A- 9 176 397
- JP-A- 11 021 413
- JP-A- 2002 069 202
- JP-A- 2002 080 737
- US-B1- 6 331 591

## Description

### TECHNICAL FIELD

The present invention relates to the use in a clean room of a shaped article, in particular, a shaped article comprising a resin composition prepared by melt-kneading a cyclic olefin polymer, a flexible copolymer and a radical initiator. The invention also relates to a shaped article for clean rooms and a method for producing such a shaped article for clean rooms.

### BACKGROUND ART

Silicon wafers in a semiconductor production process, glass substrates in a liquid-crystal panel production process, and metal discs in a hard disc production process are handled in clean rooms for preventing their contamination. In these production processes, used are various resin shaped articles such as containers, trays and tweezers for efficiently handling these substrates. For example, used are containers for casing plural substrates at the same time therein and for transporting them from a specific process to a next process in a clean room; containers for various treatment therein; and tools such as tweezers for carrying sheet wafers.

These resin shaped articles used in a clean room are required to have high contamination resistance in order that they should not be a contamination source by themselves. For example, it is important that the component to evaporate away in air from the shaped article is small and the component to be eluted in water or chemicals is small. In addition, it is also important that the shaped article does not produce dust when in contact with any other member. A wafer carrier is described as one example. Its contact with a hard member is inevitable, for example, when a silicon wafer is put into it or taken out of it or when the carrier is transported by a robot. Therefore, a resin shaped article of good abrasion resistance capable of inhibiting generation of particles even in such a case is greatly desired. It is often that an antistatic property is imparted to a resin shaped article for preventing electric breakage of electronic devices and for preventing particle adhesion. In the recent art of device miniaturization, the size of the particles to be controlled is being smaller, and therefore the demand for prevention of particle generation is being much severe.

Cyclic olefin polymers have good chemical resistance, heat resistance and weather resistance, and their shaped articles have good dimensional accuracy and good rigidity, and therefore they have many applications for various shaped articles. For example, Patent Reference 1 describes a resin composition prepared by compounding specific carbon fibers with a cyclic polyolefin. It says that the resin composition is antistatic and bleeds few impurities and therefore can be used as a material for electronic parts carriers such as IC carriers and wafer carriers. However, the impact resistance and the abrasion resistance of the resin composition are insufficient. On the other hand, Patent Reference 2 describes a resin composition prepared by compounding rubber and conductive carbon fibers with a cyclic olefin polymer, saying that the composition can be used as a carrying tool or a wrapping material for electronic instruments, IC, etc. The impact resistance of the shaped article of the resin composition is improved as the composition contains rubber, but the abrasion resistance thereof is still insufficient. The reference says that, since carbon fibers are added thereto in place of carbon black, the shaped article does not black any other member that is in contact with it. However, it says nothing relating to the volatile component and the eluted component of the resin composition.

Patent Reference 3 describes a crosslinked impact-resistant cyclic olefin resin composition comprising a reaction product of a cyclic olefin random copolymer comprising an ethylene component and a cyclic olefin component and having a softening temperature not lower than 70°C, a flexible copolymer having a glass transition temperature of not higher than 0°C, and an organic peroxide. Patent Reference 3 says that the resin composition has good impact strength, especially good low-temperature impact resistance, but says nothing relating to abrasion resistance and contamination resistance thereof.

Patent Reference 1:JP-A 7-126434 (Claims, [0016])
Patent Reference 2:JP-A 7-109396 (Claims, [0001] to [0003])
Patent Reference 3: JP-A 2-167318 (Claims, Effect of the Invention)

### DISCLOSURE OF THE INVENTION

### Problems that the Invention is to Solve:

The present invention has been made for the purpose of solving the above problems, and its object is to provide a shaped article for clean rooms, which has good chemical resistance, heat resistance and dimensional accuracy, which is inhibited from releasing a volatile component around it, which has good abrasion resistance and which is inhibited from producing particles, and to provide a method for producing it.

### Means for Solving the Problems:

The above-mentioned problems are solved by providing the use in a clean room of a shaped article comprising a resin composition preparable by melt-kneading:
100 parts by weight of a cyclic olefin polymer (A) having a glass transition temperature of from 60 to 200°C, from 1 to 150 parts by weight of a flexible copolymer (B) preparable by polymerizing at least two monomers selected from a group consisting of olefins, dienes and aromatic vinyl-hydrocarbons, and having a glass transition temperature of 0°C or lower, from 0.001 to 1 part by weight of a radical initiator (C), and from 0 to 1 part by weight of a polyfunctional compound (D) having at least two radical-polymerizable functional groups in the molecule.

Preferably, the cyclic olefin polymer (A) is a polymer preparable by polymerizing a cyclic olefin of the following formula [I] or [II]. Especially preferably, the cyclic olefin polymer (A) is a random copolymer of ethylene and a cyclic olefin of the following formula [I] or [II]. Also preferably, MFR (as measured at 230°C and under a load of 2.16 kg according to ASTM D1238) of the cyclic olefin polymer (A) is from 0.1 to 500 g/10 min.

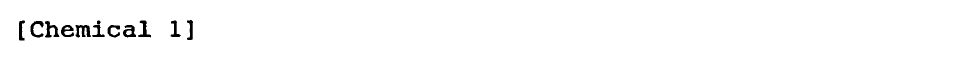

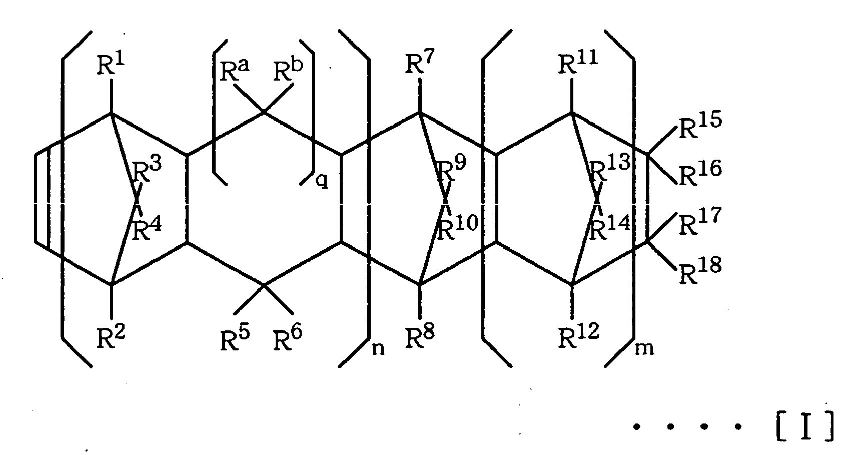

(In formula [I], n indicates 0 or 1; m indicates 0 or a positive integer; q indicates 0 or 1; R¹ to R¹⁸ and R^{a} and R^{b} each independently represent a hydrogen atom, a halogen atom or a hydrocarbon group; R¹⁵ to R¹⁸ may bond to each other to form a monocyclic or polycyclic structure, and the monocyclic or polycyclic structure may have a double bond; and R¹⁵ and R¹⁶, or R¹⁷ and R¹⁸ may form an alkylidene group.)

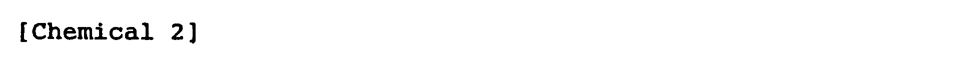

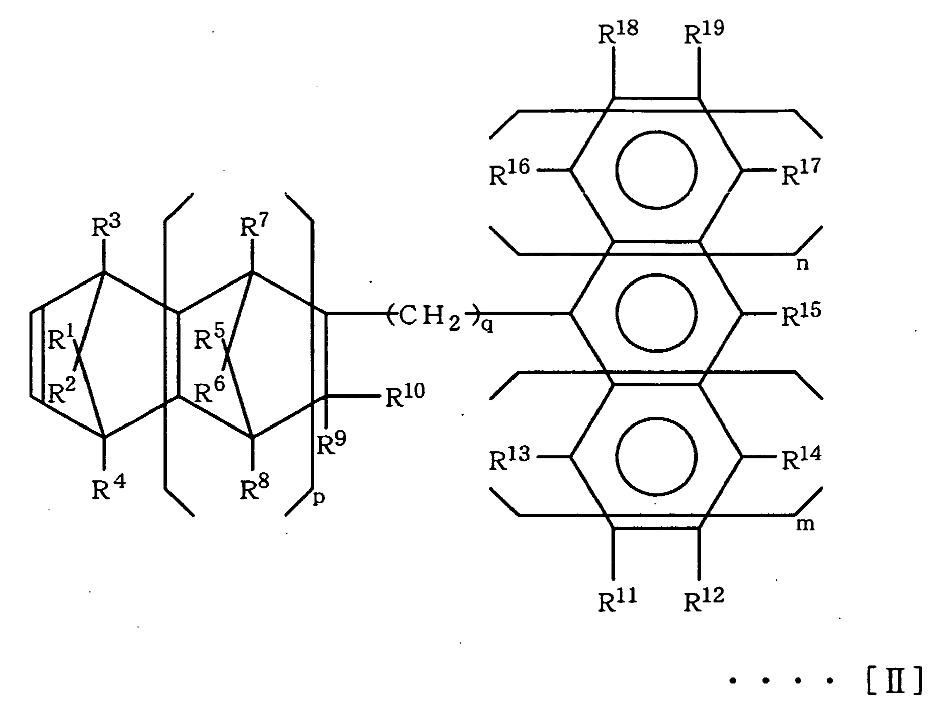

(In formula [II], p and q each indicate 0 or an integer of 1 or more; m and n each indicate 0, 1 or 2; R¹ to R¹⁹ each independently represent a hydrogen atom, a halogen atom, an aliphatic hydrocarbon group, an alicyclic hydrocarbon group, an aromatic hydrocarbon group, or an alkoxy group; the carbon atom to which R⁹ (or R¹⁰) bonds, and the carbon atom to which R¹³ or R¹¹ bonds may bond to each other directly or via an alkylene group having from 1 to 3 carbon atoms; and when n = m = 0, R¹⁵ and R¹², or R¹⁵ and R¹⁹ may bond to each other to form a monocyclic or polycyclic aromatic ring.)

Preferably, the flexible copolymer (B) is at least one copolymer selected from a group consisting of: an amorphous or low-crystalline flexible copolymer (b1) preparable by polymerizing at least two monomers selected from a group consisting of ethylene and an α-olefin having from 3 to 20 carbon atoms,
a flexible copolymer (b2) preparable by polymerizing ethylene, an α-olefin having from 3 to 20 carbon atoms, and a cyclic olefin,
a flexible copolymer (b3) preparable by polymerizing a non-conjugated diene, and at least two monomers selected from ethylene and an α-olefin having from 3 to 20 carbon atoms, and
a flexible copolymer (b4) of a random or block copolymer or its hydrogenation product of an aromatic vinyl-hydrocarbon and a conjugated diene. Above all, more preferred is an amorphous or low-crystalline flexible copolymer (b1) preparable by polymerizing at least two monomers selected from a group consisting of ethylene and an α-olefin having from 3 to 20 carbon atoms.

Preferably, the resin composition used in the invention further contains carbon fibers (E) and their content is from 1 to 100 parts by weight relative to 100 parts by weight of the total of the cyclic olefin polymer (A) and the flexible copolymer (B). Also preferably, MFR (as measured at 230°C and under a load of 2.16 kg according to ASTM D1238) of the resin composition is from 0. 01 to 100 g/10 min. Also preferably, the overall amount of gas released under heat at 150°C for 30 minutes is at most 20 µg/g in terms of hexadecane. Also preferably, the shaped article has a surface resistivity of from 10² to 10¹² Ω/square.

A preferred embodiment of the shaped articles for use in the invention is a container for a plate-like body selected from a semiconductor substrate, a display substrate and a recording medium substrate. Preferably, the plate-like body is in direct contact with the container. Also preferably, the container is to contain a container that is in direct contact with the plate-like body. A tool for handling a material, an intermediate product or a finished product is also a preferred embodiment of the invention.

The above-mentioned problems may also be solved by providing a method for producing a shaped article for clean rooms, which comprises melt-kneading:
100 parts by weight of a cyclic olefin polymer (A) having a glass transition temperature of from 60 to 200°C, from 1 to 150 parts by weight of a flexible copolymer (B) preparable by polymerizing at least two monomers selected from a group consisting of olefins, dienes and aromatic vinyl-hydrocarbons, and having a glass transition temperature of 0°C or lower, from 0.001 to 1 part by weight of a radical initiator (C), and from 1 to 100 parts by weight, relative to 100 parts by weight of the total of the cyclic olefin polymer (A) and the flexible copolymer (B), of carbon fibers (E) melt-shaping the resulting resin composition.

Preferably, a polyfunctional compound (D) having at least two radical-polymerizable functional groups in the molecule is added along with the radical initiator (C). Also preferably, the cyclic olefin polymer (A) and the flexible copolymer (B) are previously melt-kneaded, and then the radical initiator (C) is added thereto andmelt-kneaded to obtain the resin composition. More preferably, a part of the cyclic olefin polymer (A) and the flexible copolymer (B) are previously melt-kneaded, then the radical initiator (C) is added thereto and melt-kneaded, and thereafter the remaining cyclic olefin polymer (A) is added and melt-kneaded to obtain the resin composition. Also preferably,

Preferably in the above-mentioned production method, the temperature in melt-kneading to obtain the resin composition is from 150 to 350°C. Also preferably, an extruder having a vent is used for melt-kneading to obtain the resin composition. Also preferably, the time for which the melt after addition of the radical initiator (C) thereto stays in the extruder is from 30 to 1800 seconds. Also preferably, the resin composition is injection-molded at a maximum injection speed of from 100 to 240 ml/sec.

Also provided is a shaped article for clean rooms comprising a resin composition as defined by the invention, wherein said resin composition contains carbon fibers (E) and their content is from 1 to 100 parts by weight relative to 100 parts by weight of the total of the cyclic olefin polymer (A) and the flexible copolymer (B).

Preferably, the shaped article is for handling materials, intermediate products or final products in clean rooms and is a container, a tray or a tool.

### Effect of the Invention:

The shaped article for clean rooms for use in the invention has good chemical resistance, heat resistance and dimensional accuracy, not so much releasing a volatile component around it, and it has good abrasion resistance, not producing so many particles. Accordingly, it is favorably used in applications that require high-level contamination resistance, for example, for semiconductor wafer carriers.

### Brief Description of the Drawings:

[Fig. 1] It is a front view of a wafer carrier produced in Examples of the invention.
[Fig. 2] It is a back view of the wafer carrier produced in Examples of the invention.
[Fig. 3] It is a plan view of the wafer carrier produced in Examples of the invention.
[Fig. 4] It is a view showing the part of the wafer carrier for size measurement.

### Best Mode for Carrying out the Invention:

The resin composition for use in the invention is preparable by melt-kneading 100 parts by weight of a cyclic olefin polymer (A) having a glass transition temperature of from 60 to 200°C, from 1 to 150 parts by weight of a flexible copolymer (B) prepared by polymerizing at least two monomers selected from a group consisting of olefins, dienes and aromatic vinyl-hydrocarbons, and having a glass transition temperature of 0°C or lower, from 0.001 to 1 part by weight of a radical initiator (C), and from 0 to 1 part by weight of a polyfunctional compound (D) having at least two radical-polymerizable functional groups in the molecule. In this, incorporating the polyfunctional compound (D) is optional, and this may be comprised of only the three components of the cyclic olefin polymer (A), the flexible copolymer (B) and the radical initiator (C).

The cyclic olefin polymer (A) has good heat resistance, thermal aging resistance, chemical resistance, weather resistance, solvent resistance, dielectric characteristics and rigidity; and owing to such characteristics thereof, it is used in many applications. A method is known of adding the flexible copolymer (B) to the cyclic olefin polymer (A) for improving the impact resistance thereof. However, the fact has not been sufficiently recognized as yet that the abrasion resistance of the cyclic olefin polymer (A) is unsatisfactory and it could not be significantly improved even by addition of the flexible copolymer (B) thereto. The level of the necessary properties of shaped articles for clean rooms is being higher these days, and the resins for them are required to have high-level abrasion resistance. However, owing to its poor abrasion resistance, the cyclic olefin polymer (A) or its mixture with the flexible copolymer (B) alone is impracticable in some cases.

It has already been known that a resin composition prepared by melt-kneading the cyclic olefin polymer (A) and the flexible copolymer (B) in the presence of a radical initiator (C) to thereby introduce a crosslinked structure thereinto may have improved low-temperature impact resistance. The resin composition is obtained by adding the flexible copolymer (B) and a radical initiator (C) to the cyclic olefin polymer (A) and melt-kneading them for chemical reaction. Accordingly, it was expected that the composition would contain a large amount of a decomposition product formed through radical reaction, but this time when the amount of gas released from the resin composition is determined, then surprisingly it has been found that the released gas amount is on the level required for shaped articles for clean rooms. In addition, when this time the resin composition is tested for its abrasion resistance, then it has become clear that the composition has good abrasion resistance. Accordingly, it has been found that the resin composition is suitable for shaped articles for clean rooms that dislike the generation of particles. As mentioned above, it has become clear for the first time that the resin composition has properties suitable for shaped articles for clean rooms.

The cyclic olefin polymer (A) for use in the invention has a glass transition temperature of from 60 to 200°C. For satisfying the heat resistance for the shaped article for clean rooms, the glass transition temperature of the polymer must be 60°C or higher, preferably 80°C or higher, more preferably 100°C or higher. If, however, the molding temperature is too high, then the polymer may decompose, and therefore, the glass transition temperature of the polymer must be 200°C or lower. The glass transition temperature as referred to herein is a glass transition-starting temperature measured with a differential scanning colorimeter at a heating speed of 10°C/min.

Preferably, MFR (melt flow rate, as measured at 230°C and under a load of 2.16 kg according to ASTM D1238) of the cyclic olefin polymer (A) is from 0.1 to 500 g/10 min. If MFR is lower than 0.1 g/10 min, then the melt viscosity of the polymer is too high and the melt moldability of the resulting resin composition may worsen. More preferably, MFR is at least 0.5 g/10 min, even more preferably at least 1 g/10 min. On the other hand, if MFR is larger than 500 g/10 min, then the mechanical strength of the resulting resin composition may lower. More preferably, MFR is at most 200 g/10 min, even more preferably at most 100 g/10 min.

The cyclic olefin polymer (A) may be any one prepared through polymerization of an aliphatic cyclic skeleton-having olefin monomer to give an aliphatic cyclic skeleton-having polymer, and its type is not specifically defined. Preferably, however, the cyclic olefin polymer (A) is a polymer preparable through polymerization of a cyclic olefin of the following formula [I] or [II]:

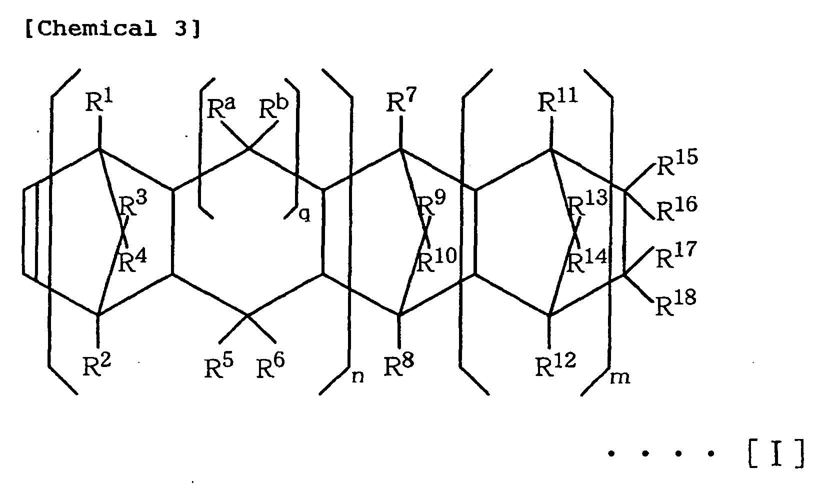

(In formula [I], n indicates 0 or 1; m indicates 0 or a positive integer; q indicates 0 or 1; R¹ to R¹⁸ and R^{a} and R^{b} each independently represent a hydrogen atom, a halogen atom or a hydrocarbon group; R¹⁵ to R¹⁸ may bond to each other to form a monocyclic or polycyclic structure, and the monocyclic or polycyclic structure may have a double bond; and R¹⁵ and R¹⁶, or R¹⁷ and R¹⁸ may form an alkylidene group.)

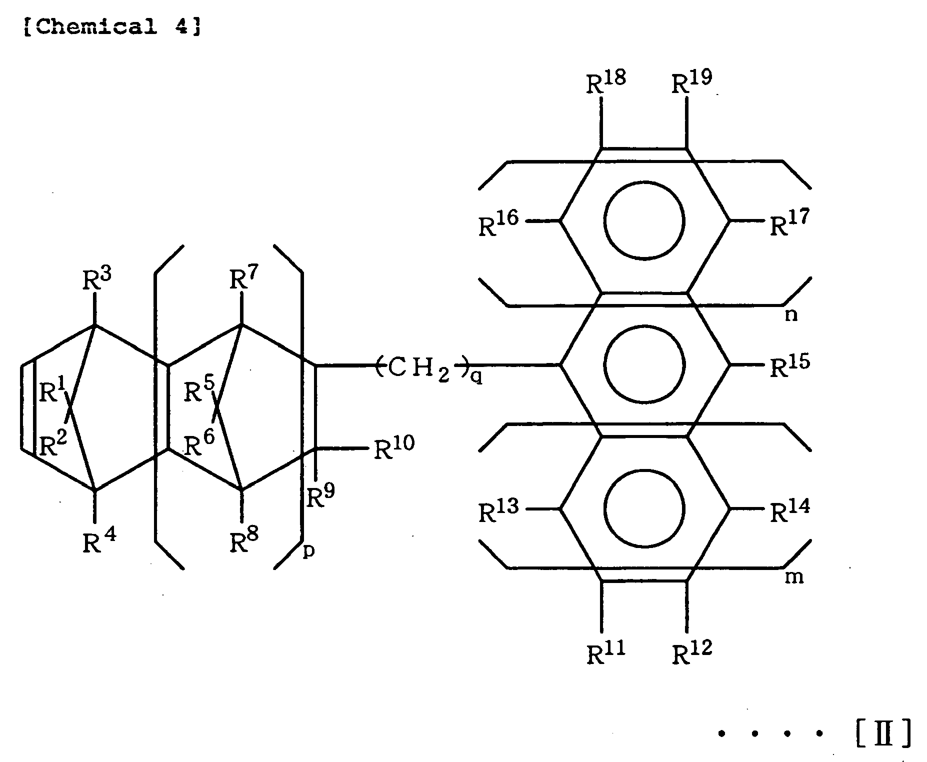

(In formula [II], p and q each indicate 0 or an integer of 1 or more; m and n each indicate 0, 1 or 2; R¹ to R¹⁹ each independently represent a hydrogen atom, a halogen atom, an aliphatic hydrocarbon group, an alicyclic hydrocarbon group, an aromatic hydrocarbon group, or an alkoxy group; the carbon atom to which R⁹ (or R¹⁰) bonds, and the carbon atom to which R¹³ or R¹¹ bonds may bond to each other directly or via an alkylene group having from 1 to 3 carbon atoms; and when n = m = 0, R¹⁵ and R¹², or R¹⁵ and R¹⁹ may bond to each other to form a monocyclic or polycyclic aromatic ring.)

Preferred examples of the polymer preparable by polymerizing the cyclic olefin of formula [I] or [II] are (a1), (a2), (a3) and (a4) mentioned below.
(a1) : Random copolymer of ethylene and a cyclic olefin of formula [I] or [II] (ethylene-cyclic olefin random copolymer).
(a2): Ring-opening polymer or ring-opening copolymer of a cyclic olefin of formula [I] or [II].
(a3): Hydrogenation product of (a2).
(a4): Graft-modification product of (a1), (a2) or (a3).

The cyclic olefin of formula [I] or [II] to form the cyclic olefin polymer (A) for use in the invention is described.

The chemical formula of the cyclic olefin [I] is as follows :

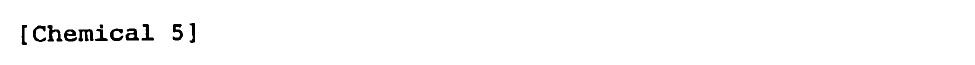

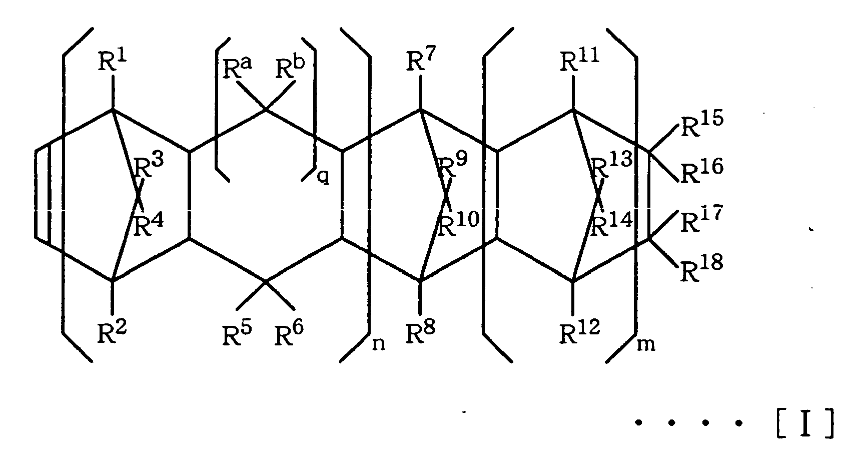

In formula [I], n indicates 0 or 1; m indicates 0 or a positive integer; q indicates 0 or 1. When q is 1, then R^{a} and R^{b} each independently represent an atom or a hydrocarbon group mentioned below; and when q is 0, then the dangling bonds bond to each other to form a 5-membered ring.

R¹ to R¹⁸ and R^{a} and R^{b} each independently represent a hydrogen atom, a halogen atom or a hydrocarbon group. The halogen atom is a fluorine atom, a chlorine atom, a bromine atom or an iodine atom.

The hydrocarbon group is independently and generally an alkyl group having from 1 to 20 carbon atoms, a cycloalkyl group having from 3 to 15 carbon atoms, or an aromatic hydrocarbon group. More concretely, the alkyl group includes a methyl group, an ethyl group, a propyl group, an isopropyl group, an amyl group, a hexyl group, an octyl group, a decyl group, a dodecyl group and an octadecyl group; the cycloalkyl group includes a cyclohexyl group; and the aromatic hydrocarbon group includes a phenyl group and a naphthyl group.

The hydrocarbon group may be substituted with a halogen atom. In formula [I], R¹⁵ to R¹⁸ may bond to each other (or together) to form a monocyclic or polycyclic structure, and the monocyclic or polycyclic structure thus formed may have a double bond. Concrete examples of the monocyclic or polycyclic structure to be formed herein are mentioned below.

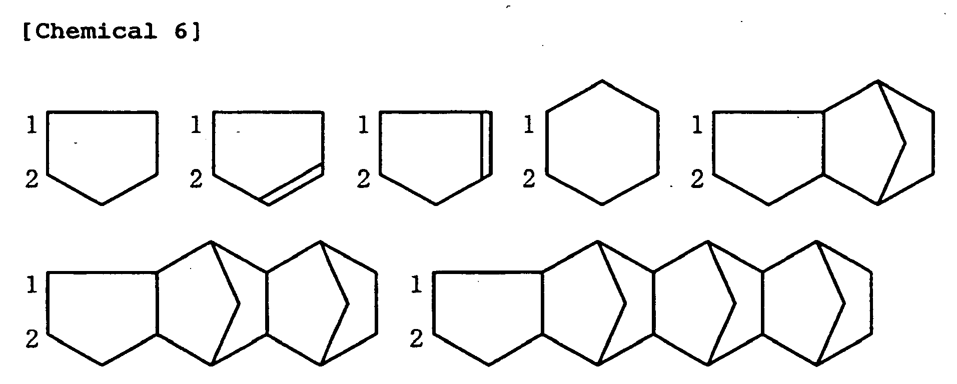

In the above examples, the carbon atom with a number 1 or 2 is a carbon atom in formula [I] to which R¹⁵ (R¹⁶) or R¹⁷ (R¹⁸) bonds. R¹⁵ and R¹⁶, or R¹⁷ and R¹⁸ may form an alkylidene group. The alkylidene group is generally an alkylidene group having from 2 to 20 carbon atoms, and its specific examples are an ethylidene group, a propylidene group and an isopropylidene group.

The chemical formula of the cyclic olefin [II] is mentioned below.

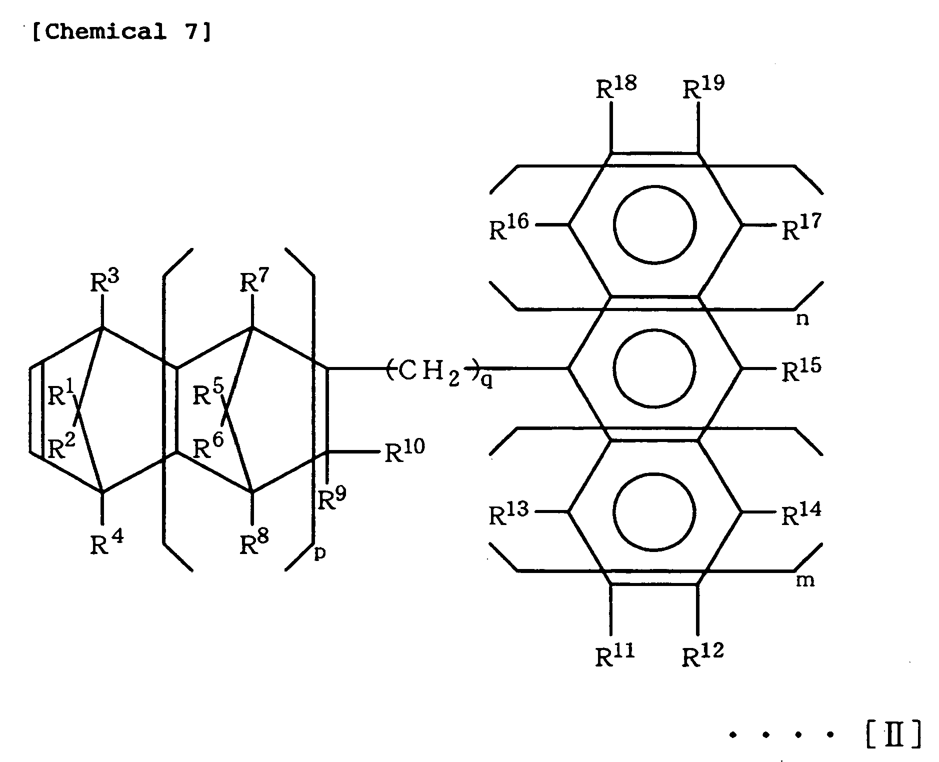

In formula [II], p and q each indicate 0 or a positive integer; m and n each indicate 0, 1 or 2. R¹ to R¹⁹ each independently represent a hydrogen atom, a halogen atom, a hydrocarbon group or an alkoxy group.

The halogen atom has the same meaning as that in formula [I]. The hydrocarbon group each independently includes an alkyl group having from 1 to 20 carbon atoms, a halogenoalkyl group having from 1 to 20 carbon atoms, a cycloalkyl group or an aromatic hydrocarbon group having from 3 to 15 carbon atoms. More concretely, the alkyl group includes a methyl group, an ethyl group, a propyl group, an isopropyl group, an amyl group, a hexyl group, an octyl group, a decyl group, a dodecyl group and an octadecyl group; the cycloalkyl group includes a cyclohexyl group; and the aromatic hydrocarbon group includes an aryl group and an aralkyl group, concretely a phenyl group, a tolyl group, a naphthyl group, a benzyl group and a phenylethyl group.

The alkoxy group includes a methoxy group, an ethoxy group and a propoxy group. These hydrocarbon group and alkoxy group may be substituted with a fluorine atom, a chlorine atom, a bromine atom or an iodine atom.

The carbon atom to which R⁹ and R¹⁰ bond, and the carbon atom to which R¹³ bonds or the carbon atom to which R¹¹ bonds may bond to each other directly or via an alkylene group having from 1 to 3 carbon atoms. Specifically, when the above two carbon atoms bond to each other via an alkylene group, then the groups represented by R⁹ and R¹³, or the groups represented by R¹⁰ and R¹¹ together form a methylene group (-CH₂-), an ethylene group (-CH₂CH₂-) or a propylene group (-CH₂CH₂CH₂-).

When n = m = 0, then R¹⁵ and R¹², or R¹⁵ and R¹⁹ may bond to each other to form a monocyclic or polycyclic aromatic ring. The monocyclic or polycyclic aromatic ring in the case includes, for example, the groups mentioned below in which R¹⁵ and R¹² form an aromatic ring when n = m = 0.

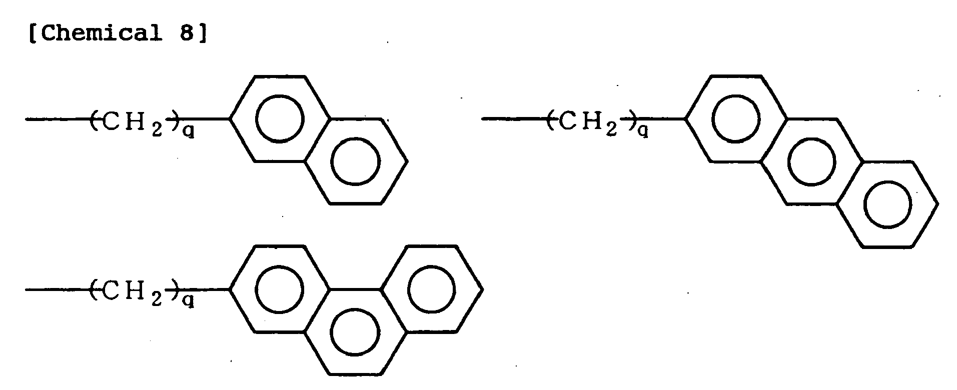

q has the same meaning as that in formula [II].

More concrete examples of the cyclic olefins of formula [I] or [II] are shown below. First mentioned are bicyclo[2.2.1]-2-heptene(=norbornene) (in the above-mentioned general formula, the numbers of 1 to 7 each indicate the carbon position number therein), and derivatives of the compound substituted with a hydrocarbon group.

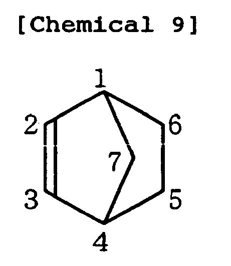

Examples of the hydrocarbon group are 5-methyl, 5,6-dimethyl, 1-methyl, 5-ethyl, 5-n-butyl, 5-isobutyl, 7-methyl, 5-phenyl, 5-methyl-5-phenyl, 5-benzyl, 5-tolyl, 5-(ethylphenyl), 5-(isopropylphenyl), 5-(biphenyl), 5-(β-naphthyl), 5-(α-naphthyl), 5-(anthracenyl), 5,6-diphenyl.

As examples of other derivatives, further mentioned are cyclopentadiene-acenaphthylene adduct, and bicyclo[2.2.1]-2-heptene derivatives such as 1,4-methano-1,4,4a,9a-tetrahydrofluorenone, 1,4-methano-1,4,4a,5,10,10a-hexahydroanthracene.

In addition, also mentioned are tricyclo[4.3.0.1^{2,5}]-3-decene derivatives such as tricyclo[4.3.0.1^{2,5}]-3-decene, 2-methyltricyclo[4.3.0.1^{2,5}]-3-decene, 5-methyltricyclo[4.3.0.1^{2,5}]-3-decene; tricyclo[4.4.0.1^{2,5}]-3-undecene derivatives such as tricyclo[4.4.0.1^{2,5}]-3-undecene, 10-methyltricyclo[4.4.0.1^{2,5}]-3-undecene.

Also mentioned are tetracyclo[4.4.0.1^{2,5}.1^{7,10}]-3-dodecene represented by the following structural formula, and its derivatives substituted with a hydrocarbon group.

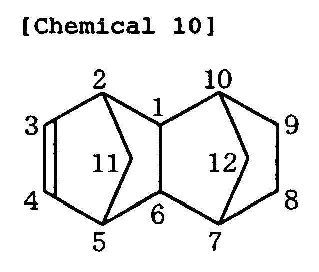

Examples of the hydrocarbon group are 8-methyl, 8-ethyl, 8-propyl, 8-butyl, 8-isobutyl, 8-hexyl, 8-cyclohexyl, 8-stearyl, 5,10-dimethyl, 2,10-dimethyl, 8,9-dimethyl, 8-ethyl-9-methyl, 11,12-dimethyl, 2,7,9-trimethyl, 2,7-dimethyl-9-ethyl, 9-isobutyl-2,7-dimethyl, 9,11,12-trimethyl, 9-ethyl-11,12-dimethyl, 9-isobutyl-11,12-dimethyl, 5,8,9,10-tetramethyl, 8-ethylidene, 8-ethylidene-9-methyl, 8-ethylidene-9-ethyl, 8-ethylidene-9-isopropyl, 8-ethylidene-9-butyl, 8-n-propylidene, 8-n-propylidene-9-methyl, 8-n-propylidene-9-ethyl, 8-n-propylidene-9-isopropyl, 8-n-propylidene-9-butyl, 8-isopropylidene, 8-isopropylidene-9-methyl, 8-isopropylidene-9-ethyl, 8-isopropylidene-9-isopropyl, 8-isopropyliden-9-butyl, 8-chloro-, 8-bromo, 8-fluoro, 8,9-dichloro, 8-phenyl, 8-methyl-8-phenyl, 8-benzyl, 8-tolyl, 8-(ethylphenyl), 8-(isopropylphenyl), 8,9-diphenyl, 8-(biphenyl), 8-(β-naphthyl), 8-(α-naphthyl), 8-(anthracenyl), 5,6-diphenyl.

Further mentioned are tetracyclo[4.4.0.1^{2,5}.1^{7,10}]-3-dodecene derivatives such as adduct of (cyclopentadiene-acenaphthylene adduct) and cyclopentadiene; pentacyclo[6.5.1.1^{3,6}.0^{2,7}.0^{9,13}]-4-pentadecene and its derivatives, pentacyclo[7.4.0.1^{2,5}.1^{9,12}.0^{8,13}]-3-pentadecene and its derivatives, pentacyclo[8.4.0.1^{2,5}.1^{9.12}.0^{8,13}]-3-hexadecene and its derivatives, pentacyclo[6.6.1.1^{3,6}.0^{2,7}.0^{9,14}]-4-hexadecene and its derivatives, hexacyclo[6.6.1.1^{3,6}.1^{10,13}.0^{2,7}0^{9,14}]-4-heptadecene and its derivatives, heptacyclo[8.7.0.1^{2,9}.1^{4,7}.1^{11,17}.0^{3,8}.0^{12,16}]-5-eicosene and its derivatives, heptacyclo[8.7.0.1^{3,6}.1^{10,17},1^{12,15}.0^{2,7}.0^{11,16}]-4-eicosene and its derivatives, heptacyclo[8.8.0.1^{2,9}.1^{4,7}.1^{11,18}.0^{3,8}.0^{12,17}]-5-heneicosene and its derivatives, octacyclo[8.8.0.1^{2,9}.1^{4,7}.1^{11,18}.1^{13,16}.0^{3,8}.0^{12,17}]-5-docosene and its derivatives, nonacyclo[10.9.1.1^{4,7}.1^{13,20} .1^{15,18}. 0^{2,10},0^{3,8}. 0^{12,21}.0^{14,19}]-5-penta cosene and its derivatives.

Examples of the cyclic olefin of formula [I] or [II] usable in the invention are mentioned above, and more concrete structures of these compounds are shown in JP-A 7-145213, paragraphs [0032] to [0054], which are usable as the cyclic olefin in the invention.

The cyclic olefin of formula [I] or [II] mentioned above may be produced through Diels-Alder reaction of cyclopentadiene and an olefin having the corresponding structure.

One or more types of these cyclic olefins may be used herein either singly or as combined. Preferably using the cyclic olefin of formula [I] or [II] mentioned above, the cyclic olefin polymer (A) for use in the invention may be produced, for example, according to the methods described in JP-A 60-168708,JP-A 61-120816, JP-A61-115912, JP-A61-115916, JP-A61-271308, JP-A 61-272216, JP-A 62-252406, JP-A 62-252407 with suitably selecting the condition for the production.

### (a1): Ethylene/cyclic olefin random copolymer:

In the ethylene/cyclic olefin random copolymer (a1), the constitutional unit derived from ethylene and the constitutional unit derived from the cyclic olefin as above bond to each other in random configuration, therefore having a substantially linear structure. The substantially linear structure of the copolymer not having a substantially gel-like crosslinked structure is confirmed by the fact that, when the copolymer dissolves in an organic solvent, the resulting solution contains no insoluble. For example, when the intrinsic viscosity [η] thereof is measured, the copolymer completely dissolves in decalin at 135°C, and this confirms the above.

In the ethylene/cyclic olefin random copolymer (a1) for use in the invention, at least a part of the cyclic olefin of formula [I] or [II] may constitute a repeating unit of the following formula [III] or [IV].

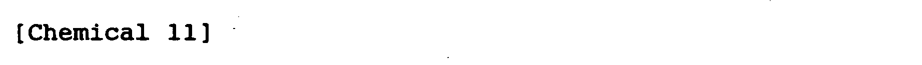

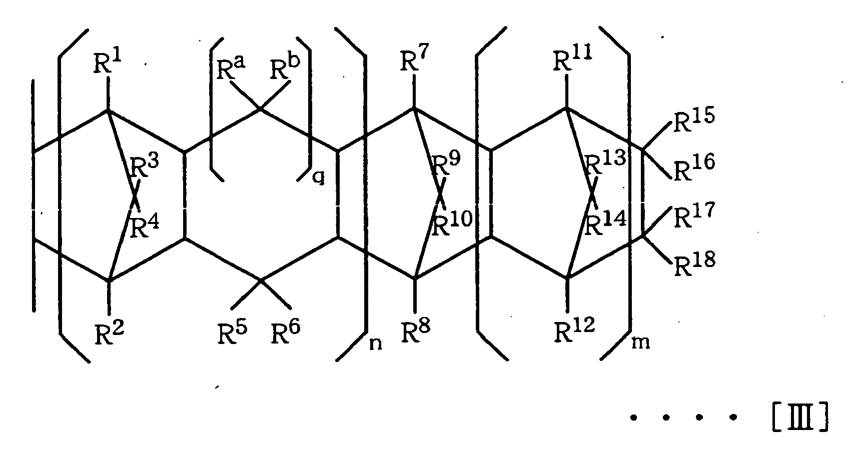

In formula [III], n, m, q, R¹ to R¹⁸, R^{a} and R^{b} have the same meanings as in formula [I].

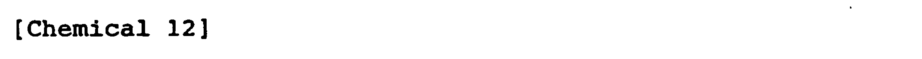

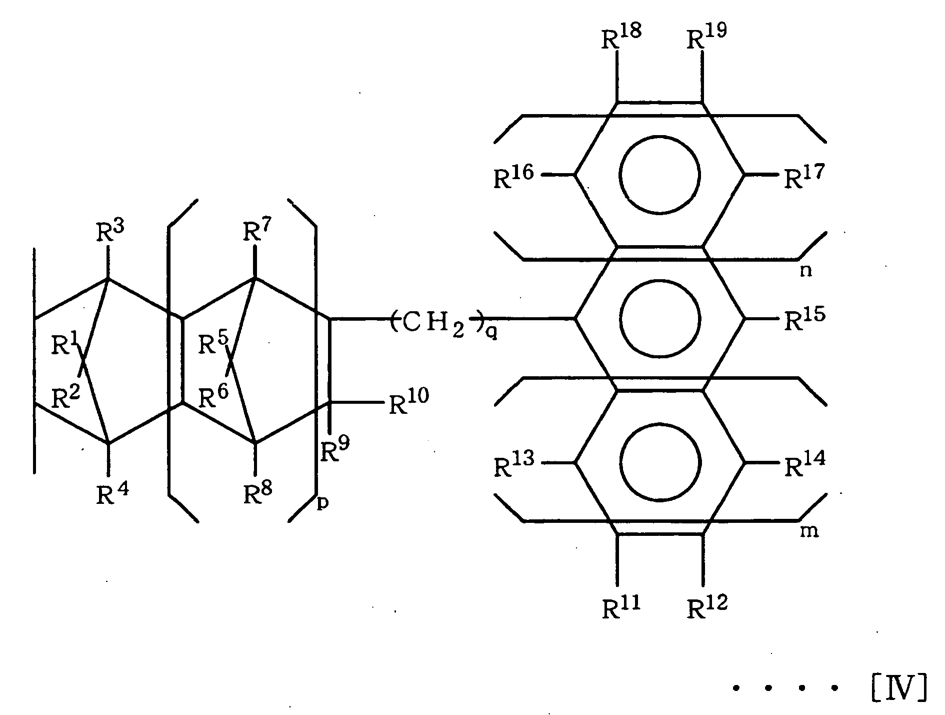

In formula [IV], n, m, p, q, and R¹ to R¹⁹ have the same meanings as in formula [II]. Without detracting from the object of the invention, the ethylene/cyclic olefin random copolymer (a1) for use in the invention may optionally have a constitutional unit derived from any other copolymerizable monomer.

The other monomers may be olefins except ethylene and cyclic olefins mentioned above, concretely including α-olefins having from 3 to 20 carbon atoms such as propylene, 1-butene, 1-pentene, 1-hexene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 1-octene, 1-decene, 1-dodecene, 1-tetradecene, 1-hexadecene, 1-otcadecene and 1-eicosene; cyclo-olefins such as cyclobutene, cyclopentene, cyclohexene, 3,4-dimethylcyclopentene, 3-methylcyclohexene, 2-(2-methylbutyl)-1-cyclohexene, cyclooctene and 3a,5,6,7a-tetrahydro-4,7-methano-1H-indene; and non-conjugated dienes such as 1,4-hexadiene, 4-methyl-1,4-hexadiene, 5-methyl-1,4-hexadiene, 1,7-octadiene, dicyclopentadiene and 5-vinyl-2-norbornene.

These other monomers may be used herein either singly or as combined. In the ethylene/cyclic olefin random copolymer (a1), the constitutional unit derived from the other monomer as above may be generally in an amount of at most 20 mol%, preferably at most 10 mol%.

The ethylene/cyclic olefin random copolymer (a1) for use in the invention may be produced according to the production methods disclosed in the above-mentioned patent publications, using ethylene and a cyclic olefin of formula [I] or [II]. Of those, preferred is a method of producing the ethylene/cyclic olefin random copolymer (a1) through copolymerization in a hydrocarbon solvent using a catalyst formed from a vanadium compound and an organoaluminium compound soluble in the hydrocarbon solvent.

For the copolymerization, also usable is a solid Group 4 metallocene catalyst. The solid Group 4 metallocene catalyst is a catalyst comprising a transition metal compound that contains a cyclopentadienyl skeleton-having ligand, an organoaluminiumoxy compound, and optionally an organoaluminium compound. The transition metal belonging to the Group 4 of the Periodic Table is zirconium, titanium or hafnium, and the transition metal has at least one cyclopentadienyl skeleton-containing ligand. Examples of the cyclopentadienyl skeleton-containing ligand are a cyclopentadienyl group, an indenyl group, a tetrahydroindenyl group and a fluorenyl group optionally substituted with an alkyl group. These groups may bond to the compound via any other group such as an alkylene group. Other ligands than the cyclopentadienyl skeleton-containing ligand are an alkyl group, a cycloalkyl group, an aryl group and an aralkyl group and so on.

The organoaluminiumoxy group and the organoaluminium compound may be those generally used in producing olefin resins. The solid Group 4 metallocene catalyst is described, for example, in JP-A 61-221206, JP-A 64-106, JP-A 2-173112.

### (a2): Ring-opening polymer or ring-opening copolymer of cyclic olefin:

In the ring-opening polymer or ring-opening copolymer of cyclic olefin, at least a part of the cyclic olefin of formula [I] or [II] may constitute a repeating unit of the following formula [V] or [VI]:

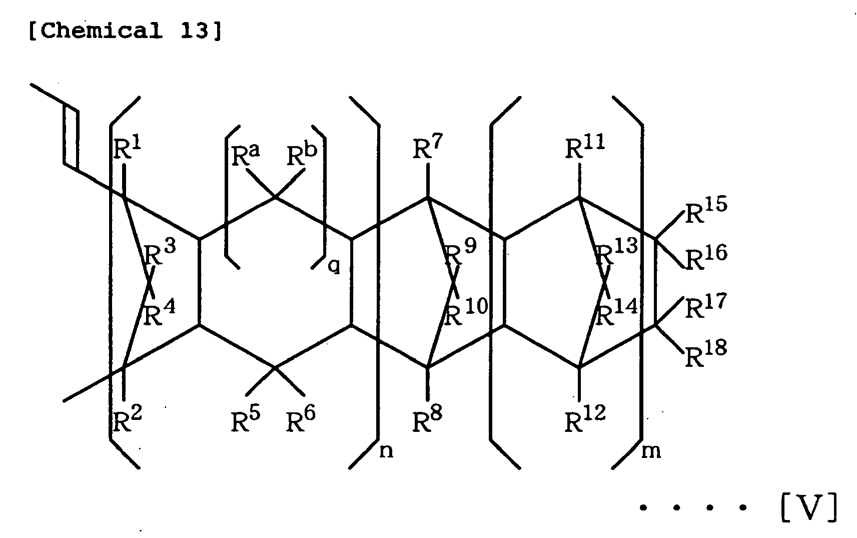

In formula [V], n, m, q, R¹ to R¹⁸, R^{a} and R^{b} have the same meanings as in formula [I].

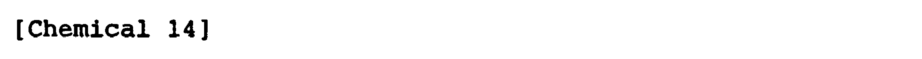

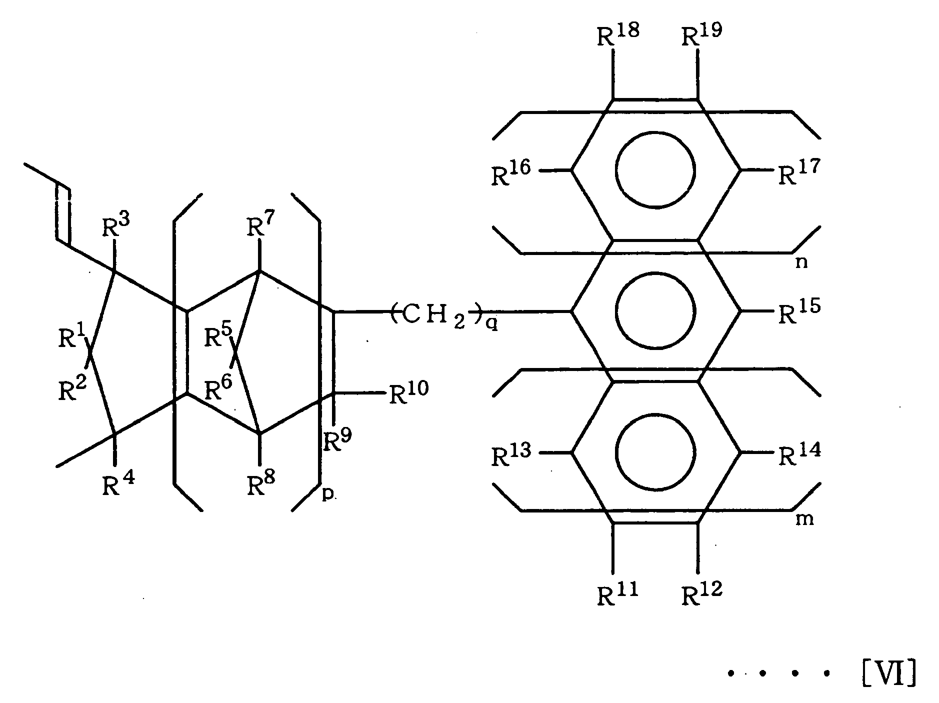

In formula [VI], n, m, p, q, and R¹ to R¹⁹ have the same meanings as in formula [II]. The ring-opening polymer or the ring-opening copolymer may be produced according to the production methods disclosed in the above-mentioned patent publications. For example, a cyclic olefin of formula [I] may be polymerized or copolymerized in the presence of a ring-opening polymerization catalyst.

The ring-opening polymerization catalyst for use herein may be a catalyst comprising a halide of a metal selected from ruthenium, rhodium, palladium, osmium, indium or platinum, a nitrate or an acetylacetone compound, and a reducing agent; or a catalyst comprising a halide of a metal selected from titanium, palladium, zirconium or molybdenum or an acetylacetone compound, and an organoaluminium compound.

### (a3): Hydrogenation product of ring-opening polymer or ring-opening copolymer:

The hydrogenation product (a3) of a ring-opening polymer or a ring-opening copolymer which is for use in the invention may be obtained by hydrogenating the ring-opening polymer or ring-opening copolymer (a2) obtained in the manner as above, in the presence of a conventional known hydrogenation catalyst.

In the hydrogenation product (a3) of a ring-opening polymer or a ring-opening copolymer, at least a part of the cyclic olefin of formula [I] or [II] may have a repeating unit of the following formula [VII] or [VIII]:

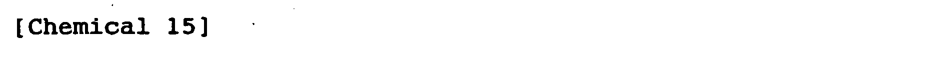

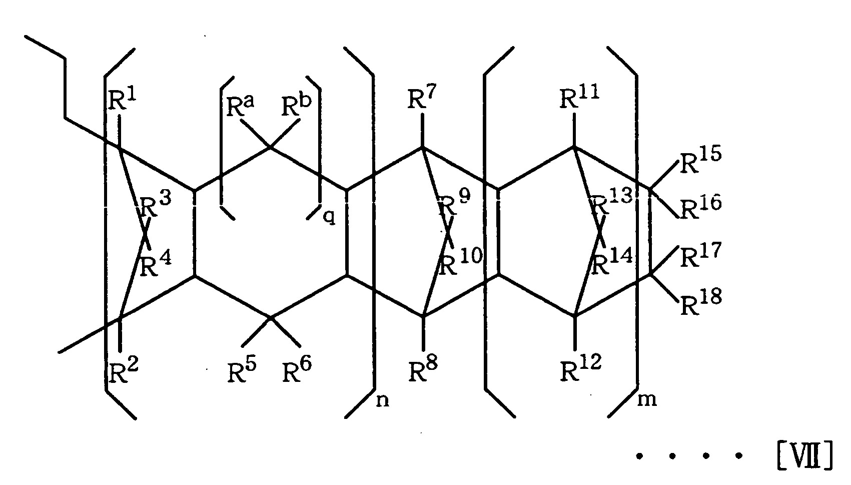

In formula [VII], n, m, q, R¹ to R¹⁸, R^{a} and R^{b} have the same meanings as in formula [I].

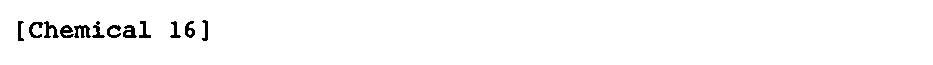

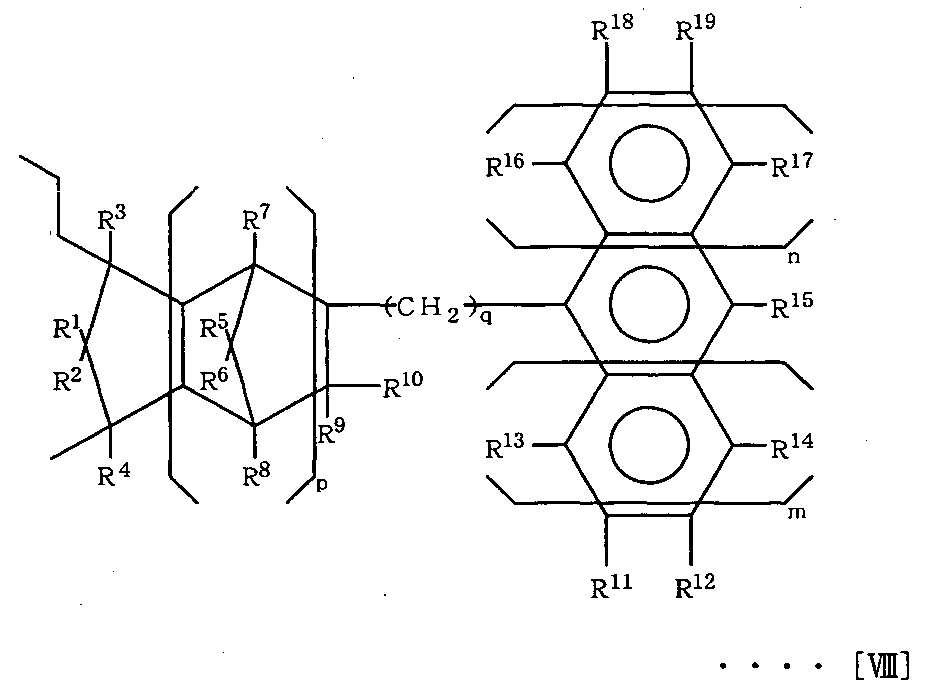

In formula [VIII], n, m, p, q, and R¹ to R¹⁹ have the same meanings as in formula [II].

The hydrogenation product (a3) of a ring-opening polymer or an addition copolymer which is for use in the invention is preferably a hydrogenation polymer of the ring-opening polymer or ring-opening copolymer of the above-mentioned norbornene and its derivative substituted with a hydrocarbon group.

### (a4): Graft-modification product:

The graft-modification product (a4) is a graft-modification product of the ethylene/cyclic olefin random copolymer (a1), the ring-opening polymer or ring-opening copolymer of a cyclic olefin (a2), or the hydrogenation product of a ring-opening polymer or a ring-opening copolymer (a3) mentioned above.

For the modifying agent, generally used is an unsaturated carboxylic acid. Concretely, it includes unsaturated carboxylic acids such as (meth) acrylic acid, maleic acid, fumaric acid, tetrahydrophthalic acid, itaconic acid, citraconic acid, crotonic acid, isocrotonic acid, endocis-bicyclo[2.2.1]hept-5-ene-2,3-dicarboxylic acid (nadicacid); and derivatives of the unsaturated carboxylic acids such as unsaturated carboxylic acid anhydrides, unsaturated carboxylic acid halides, unsaturated carboxylic acid amides, unsaturated carboxylic acid imides, unsaturated carboxylic ester compounds.

More concretely, the unsaturated carboxylic acid derivatives are maleic anhydride, citraconic anhydride, malenyl chloride, maleimide, monomethyl malate, dimethyl malate, glycidyl malate and so on.

Of those modifying agents, preferred for use herein are α,β-unsaturated dicarboxylic acids and α,β-unsaturated dicarboxylic acid anhydrides, such as maleic acid, nadic acid and their acid anhydrides. Two or more of these modifying agents may be used herein, as combined.

The degree of modification of the graft-modification product (a4) of a cyclic olefin polymer which is for use in the invention is, in general, preferably at most 10 mol%. The graft-modification product (a4) of a cyclic olefin polymer may be produced through graft polymerization in the presence of a modifying agent, or by previously preparing a modification product having a high degree of modification and then mixing the modification product with a non-modified cyclic olefin polymer so as to have a desired degree of modification.

For obtaining the graft-modification product (a4) of a cyclic olef in polymer from a cyclic olef in polymer and a modifying agent, any conventional known method of polymer modification may be widely employed herein. For example, herein employable for obtaining the graft-modification product (a4) is a method of adding a modifying agent to a melt of a cyclic olefin polymer for graft polymerization (reaction) of the polymer; or a method of adding a modifying agent to a solution of a cyclic olefin polymer in a solvent for grafting reaction of the polymer.

The grafting reaction may be attained generally at 60 to 350°C. The grafting reaction may also be attained in the presence of a radical initiator such as organic peroxides and azo compounds.

The modification product having a degree of modification as above may be directly obtained through grafting reaction of a cyclic olefin polymer and a modifying agent. It may also be obtained by previously preparing a modification product having a high degree of modification through grafting reaction of a cyclic olefin polymer with a modifying agent and then diluting the modification product with a non-modified cyclic olefin polymer so as to have a desired degree of modification.

In the invention, any of the above-mentioned (a1), (a2), (a3) and (a4) may be used for the cyclic olefin polymer (A) either singly or as combined.

Of those, preferred is the ethylene/cyclic olefin random copolymer (a1), or that is, a random copolymer of ethylene and a cyclic olefin of formula [I] or [II]. The ethylene/cyclic olefin random copolymer (a1) is favorably used since it gives a resin composition having good abrasion resistance and releasing few volatile substances.

Preferred examples of the cyclic olefin of formula [I] or [II] that is used as the starting material for the ethylene/cyclic olefin random copolymer (a1) are the above-mentioned tetracyclo[4.4.0.1^{2,5}.1^{7,10}]-3-dodecene and its derivatives substituted with a hydrocarbon group, from the viewpoint of the heat resistance and the availability thereof, and tetracyclo[4.4.0.1^{2,5}.1^{7,10}]-3-dodecene is an especially preferred example of the compound.

Preferably, the ethylene content of the ethylene/cyclic olefin random copolymer (a1) is from 40 to 85 mol% in view of the heat resistance and the rigidity thereof. More preferably, the ethylene content is at least 50 mol%. Also more preferably, the ethylene content is at most 75 mol%. The cyclic olefin content is preferably from 15 to 60 mol%. More preferably, the cyclic olefin content is at least 25 mol%. Also more preferably, the cyclic olefin content is at most 50 mol%.

The flexible copolymer (B) is described. The flexible copolymer (B) for use in the invention has a glass transition temperature not higher than 0°C. For sufficiently improving the abrasion resistance of the shaped article for clean rooms obtained herein, the glass transition temperature must be 0°C or lower, preferably -10°C or lower, more preferably -20°C or lower. In general, the glass transition temperature is not lower than -100°C. The degree of crystallinity of the copolymer, as measured through X-ray diffractiometry, is preferably from 0 to 30 %, more preferably from 0 to 25 %.

Preferably, MFR (melt flow rate: as measured at 230°C and under a load of 2.16 kg according to ASTM D1238) of the flexible copolymer (B) is from 0.01 to 200 g/10 min. If MFR thereof is lower than 0.01 g/10 min, then the melt viscosity of the copolymer may be too high and the melt moldability of the resulting resin composition may worsen. More preferably, MFR is at least 0.05 g/10 min, even more preferably at least 0.1 g/10 min. On the other hand, if MFR is over 200 g/10 min, then the mechanical strength of the resulting shaped article may lower. More preferably, MFR is at most 150 g/10 min, even more preferably at most 100 g/10 min. Also preferably, the intrinsic viscosity [η], as measured in decalin at 135°C, of the copolymer for use herein is preferably from 0.01 to 10 dl/g, more preferably from 0.08 to 7 dl/g.

The flexible copolymer (B) is preparable by polymerizing at least two monomers selected from a group consisting of olefins, dienes and aromatic vinyl-hydrocarbons. It is important to use the flexible copolymer (B) formed of such monomers from the viewpoint of the affinity thereof to the cyclic olefin polymer (A). Without detracting from the effect of the invention, a small amount of any other monomer than the above-mentioned monomers may be copolymerized with the copolymer.

Preferred examples of the flexible copolymer (B) are the following (b1), (b2), (b3) and (b4):
(b1): an amorphous or low-crystalline flexible copolymer preparable by polymerizing at least two monomers selected from a group consisting of ethylene and an α-olefin having from 3 to 20 carbon atoms,
(b2): a flexible copolymer preparable by polymerizing ethylene, an α-olefin having from 3 to 20 carbon atoms, and a cyclic olefin,
(b3): a flexible copolymer preparable by polymerizing a non-conjugated diene, and at least two monomers selected from ethylene and an α-olefin having from 3 to 20 carbon atoms,
(b4): a flexible copolymer of a random or block copolymer or its hydrogenation product of an aromatic vinyl-hydrocarbon and a conjugated diene.

The flexible copolymer (b1) is an amorphous or low-crystalline flexible copolymer preparable by polymerizing at least two monomers selected from a group consisting of ethylene and an α-olefin having from 3 to 20 carbon atoms. Of the above (b1) to (b4), the flexible copolymer (b1) is especially favorably used herein in view of the affinity thereof to the cyclic olefin polymer (A).

The flexible copolymer (b1) is amorphous or low-crystalline and has a glass transition temperature of not higher than 0°C, and therefore it is soft and flexible. Preferably, its density is from 0.85 to 0.91 g/cm³, more preferably from 0.85 to 0.90 g/cm³.

The flexible copolymer (b1) is preparable by polymerizing at least two olefins, and is generally a random copolymer. Concretely, ethylene/α-olefin copolymers and propylene/α-olefin copolymers and so on are usable for it. Without detracting from the object of the invention, it may contain, if desired, any other copolymerizable unsaturated monomer component.

The starting material, α-olefin for the ethylene/α-olefin copolymers may be an α-olefin having from 3 to 20 carbon atoms, and its examples are propylene, 1-butene, 1-pentene, 1-hexene, 4-methyl-l-pentene, 1-octene, 1-decene and their mixtures. Of those, especially preferred are α-olefins having from 3 to 10 carbon atoms. Above all, ethylene/propylene copolymer is favorable in view of the affinity thereof to the cyclic olefin polymer (A). The molar ratio of ethylene to α-olefin (ethylene/α-olefin) in the ethylene/α-olefin copolymer varies, depending on the type of the α-olefin therein, but is preferably from 30/70 to 95/5. The molar ratio (ethylene/α-olefin) is more preferably not less than 50/50, and more preferably not more than 90/10.

The starting material, α-olefin for the propylene/α-olefin copolymers may be an α-olefin having from 4 to 20 carbon atoms, and its examples are 1-butene, 1-pentene, 1-hexene, 4-methyl-1-pentene, 1-octene, 1-decene and their mixtures. Of those, especially preferred are α-olefins having from 4 to 10 carbon atoms. The molar ratio of propylene to α-olefin (propylene/α-olefin) in the propylene/α-olefin copolymer varies, depending on the type of the α-olefin therein, but is preferably from 30/70 to 95/5. The molar ratio (propylene/α-olefin) is more preferably not less than 50/50, and more preferably not more than 90/10.

The flexible copolymer (b2) is a flexible copolymer preparable by polymerizing ethylene, an α-olefin having from 3 to 20 carbon atoms, and a cyclic olefin. The flexible copolymer (b2) is prepared by polymerizing at least three olefins, and is generally a random copolymer. Without detracting from the object of the invention, it may contain, if desired, any other copolymerizable unsaturated monomer component.

Concretely, examples of the starting material, α-olefin having from 3 to 20 carbon atoms for the flexible copolymer (b2) are propylene, 1-butene, 4-methyl-1-pentene, 1-hexene, 1-octene, 1-decene, 1-dodecene, 1-tetradecene, 1-hexadecene, 1-octadecene, 1-eicosene. One or more of these may be used herein. The starting material, cyclic olefin for the flexible copolymer (b2) may be the same as that used as the starting material for the cyclic olefin polymer (A).

The flexible copolymer (b2) is preparable by copolymerizing the monomers preferably in a ratio of from 40 to 98 mol%, more preferably from 50 to 90 mol% of ethylene, from 2 to 50 mol%, more preferably from 5 to 40 mol% of the other α-olefin, from 2 to 20 mol%, more preferably from 2 to 15 mol% of a cyclic olefin. This is a substantially linear random copolymer in which the constitutional units derived from these monomers are randomly configured. The substantially linear structure of the flexible copolymer (b2) not having a gel-like crosslinked structure is confirmed by the fact that the copolymer completely dissolves in decalin at 135°C. The flexible copolymer (b2) may be produced by suitably selecting the condition for it according to the same method as that for the cyclic olefin polymer (A).

The flexible copolymer (b3) is a flexible copolymer preparable by polymerizing a non-conjugated diene, and at least two monomers selected from ethylene and an α-olefin having from 3 to 20 carbon atoms. The flexible copolymer (b3) is prepared by polymerizing at least one non-conjugated diene and at least two olefins, and is generally a random copolymer. Concretely, ethylene/α-olefin/diene copolymer rubber and propylene/α-olefin/diene copolymer rubber and so on are usable for it. Without detracting from the object of the invention, the copolymer may contain, if desired, any other copolymerizable unsaturated monomer component.

Alpha-olefin to constitute the ethylene/α-olefin/diene copolymer rubber may be an α-olefin having from 3 to 20 carbon atoms, and its examples are propylene, 1-butene, 1-pentene, 1-hexene, 4-methyl-1-pentene, 1-octene, 1-decene and their mixtures. Of those, especially preferred are α-olefins having from 3 to 10 carbon atoms. The molar ratio of ethylene to α-olefin (ethylene/α-olefin) in the ethylene/α-olefin/diene copolymer rubber varies, depending on the type of the α-olefin therein, but is preferably from 30/70 to 95/5.

Alpha-olefin to constitute the propylene/α-olefin/diene copolymer rubber may be an α-olefin having from 4 to 20 carbon atoms, and its examples are 1-butene, 1-pentene, 1-hexene, 4-methyl-1-pentene, 1-octene, 1-decene and their mixtures. Of those, especially preferred are α-olefins having from 4 to 10 carbon atoms. The molar ratio of propylene to α-olefin (propylene/α-olefin) in the propylene/α-olefin/diene copolymer rubber varies, depending on the type of the α-olefin therein, but is preferably from 30/70 to 95/5.

Examples of the diene component in the ethylene/α-olefin/diene copolymer rubber and the propylene/α-olefin/diene copolymer rubber are linear non-conjugated dienes such as 1,4-hexadiene, 1,6-octadiene, 2-methyl-1,5-hexadiene, 6-methyl-1,5-heptadiene, 7-methyl-1,6-octadiene; cyclohexadiene, dicyclopentadiene; cyclic non-conjugated dienes such as methyltetrahydroindene, 5-vinylnorbornene, 5-ethylidene-2-norbornene, 5-methylene-2-norbornene, 5-isopropylidene-2-norbornene, 6-chloromethyl-5-isopropenyl-2-norbornene; 2,3-diisopropylidene-5-norbornene; 2-ethylidene-3-isopropylidene-5-norbornene; 2-propenyl-2,2-norbornadiene. Preferably, the content of the diene component in the copolymer is from 1 to 20 mol%, more preferably from 2 to 15 mol%.

The flexible copolymer (b4) is a random or block copolymer or its hydrogenation product of an aromatic vinyl-hydrocarbon and a conjugated diene.

For the flexible copolymer (b4), concretely used are styrene-butadiene block copolymer rubber, styrene-butadiene-styrene block copolymer rubber, styrene-isoprene block copolymer rubber, styrene-isoprene-styrene block copolymer rubber, hydrogenated styrene-butadiene-styrene block copolymer rubber, hydrogenated styrene-isoprene-styrene block copolymer rubber, styrene-butadiene random copolymer rubber.

In the flexible copolymer (b4), in general, the molar ratio of the aromatic vinyl-hydrocarbon to the conjugated diene (aromatic vinyl-hydrocarbon/conjugated diene) is preferably from 10/90 to 70/30. The hydrogenated styrene-butadiene-styrene block copolymer rubber is a copolymer rubber preparable by hydrogenating a part or all of the double bonds remaining in a styrene-butadiene-styrene block copolymer rubber. The hydrogenated styrene-isoprene-styrene block copolymer rubber is a copolymer rubber prepared by hydrogenating a part or all of the double bonds remaining in a styrene-isoprene-styrene block copolymer rubber.

One or more of the above-mentioned flexible copolymers (b1), (b2), (b3) and (b4) may be used herein either singly or as combined.

The radical initiator (C) may be any one capable of generating a radical through thermal decomposition under heat during melt kneading, and its type is not specifically defined. It includes peroxides, azo compounds and redox initiators. However, those containing a metal are not always favorable for shaped articles for clean rooms since the metal residue may contaminate the shaped articles. Nitrogen element-containing compounds such as azo compounds may be often unfavorable since a nitrogen compound may vaporize away from the shaped articles. Accordingly, organic peroxides are favorably employed herein. Preferably, the radical initiator (C) decomposes at a suitable speed during melt kneading, and its temperature at which the half-value period becomes one minute is preferably from 30 to 250°C. More preferably, the temperature at which the half-value period becomes one minute is from 50°C to 200°C.

Organic peroxides usable for the radical initiator (C) include ketone peroxides such as methyl ethyl ketone peroxide, cyclohexanone peroxide; peroxyketals such as 1,1-bis(t-butylperoxy)cyclohexane, 2,2-bis(t-butylperoxy)octane; hydroperoxides such as t-butylhydroperoxide, cumemehydroperoxide, 2,5-dimethylhexane-2,5-dihydroxyperoxide, 1,1,3,3-tetramethylbutylhydroperoxide;dialkyl peroxides such as di-t-butyl peroxide, 2,5-dimethyl-2,5-bis(t-butylperoxy)hexane, 2,5-dimethyl-2,5-bis(t-butylperoxy)hexyne-3; diacyl peroxides such as lauroyl peroxide, benzoyl peroxide; peroxyesters such as t-butylperoxy acetate, t-butylperoxy benzoate, 2,5-dimethyl-2,5-bis(benzoylperoxy)hexane.

The resin composition used for the shaped article for clean rooms of the invention is preparable by melt-kneading a cyclic olefin polymer (A), a flexible copolymer (B) and a radical initiator (C). In this case, a polyfunctional compound (D) having at least two radical-polymerizable functional groups in the molecule may be added to these materials and melt-kneaded to attain more efficient crosslinking. Accordingly, the abrasion resistance of the shaped article may be improved.

The polyfunctional compound (D) having at least two radical-polymerizing functional groups in the molecule includes, for example, divinylbenzene, vinyl acrylate, vinyl methacrylate, triallyl isocyanurate, diallyl phthalate, ethylene dimethacrylate, trimethylolpropane triacrylate.

The resin composition used for the shaped article for clean rooms of the invention is preparable by melt-kneading 100 parts by weight of a cyclic olefin polymer (A), from 1 to 150 parts by weight of a flexible copolymer (B), from 0.001 to 1 part by weight of a radical initiator (C), and from 0 to 1 part by weight of a polyfunctional compound (D).

The amount of the flexible copolymer (B) is from 1 to 150 parts by weight relative to 100 parts by weight of the cyclic olefin polymer (A). When the amount of the flexible copolymer (B) is smaller than 1 part by weight , then the abrasion resistance of the resin article could not be improved sufficiently; and the amount is preferably at least 5 parts by weight. On the other hand, when the amount of the flexible copolymer (B) is larger than 150 parts by weight, then the toughness of the resulting shaped article may be low and the article may be difficult to use for clean rooms. Preferably, the amount is at most 125 parts by weight.

The amount of the radical initiator (C) is from 0.001 to 1 part by weight relative to 100 parts by weight of the cyclic olefin polymer (A). If the amount of the radical initiator (C) is smaller than 0.001 parts by weight, then the crosslinking reaction could not sufficiently go on and the abrasion resistance of the shaped article could not be improved sufficiently. Preferably, the amount is at least 0.01 parts by weight. On the other hand, if the amount of the radical initiator (C) is larger than 1 part by weight, then the gas release from the resin composition may increase and the contamination resistance of the composition may worsen. Preferably, the amount is at most 0.5 parts by weight.

The amount of the polyfunctional compound (D) is from 0 to 1 part by weight relative to 100 parts by weight of the cyclic olefin polymer (A). The polyfunctional compound (D) is an optional ingredient, and it may be or may not be added to the composition. For efficiently attaining the crosslinking reaction, the compound is preferably added to the composition. In that case, the preferred amount of the compound to be in the composition is at least 0.001 parts by weight, more preferably at least 0.01 parts by weight. On the other hand, however, if the amount of the polyfunctional compound (D) is larger than 1 part by weight, then the gas release from the resin composition may increase and the contamination resistance of the composition may worsen. Preferably, the amount is at most 0.5 parts by weight.

Preferably, the resin composition used for the shaped article for clean rooms of the invention further contains carbon fibers (E). Containing carbon fibers (E), the surface resistivity of the shaped article may lower, and adhesion of particles to the shaped article may be thereby prevented. In addition, containing carbon fibers (E), the hardness of the shaped article increases and the surface friction resistance thereof lowers, and therefore the abrasion resistance of the container body increases and dust formation owing to friction may be thereby prevented. Further, containing carbon fibers (E), the modulus of elasticity of the shaped article increases. Therefore, when the size of the shaped article is enlarged or even when a heavy substance is put therein, the dimensional stability of the shaped article is good.

The type of the carbon fibers (E) is not specifically defined. Various carbon fibers such as polyacrylonitrile (PAN) fibers, pitch fibers, cellulose fibers and lignin fibers may be used herein. In consideration of the easiness in melt-kneading the composition containing them, short fibers are preferred. Carbon nanotubes may also be used for the carbon fibers (E).

A preferred content of the carbon fibers (E) is from 1 to 100 parts by weight relative to 100 parts by weight of the total of the cyclic olefin polymer (A) and the flexible copolymer (B). If the content of the carbon fibers (E) is smaller than 1 part by weight, then the antistatic property of the shaped article may be insufficient. If so, in addition, the carbon fibers may be ineffective for improving the abrasion resistance and the modulus of elasticity of the shaped article. More preferably, the content of the carbon fibers (E) is at least 2 parts by weight , even more preferably at least 6 parts by weight . On the other hand, if the content of the carbon fibers (E) is larger than 100 parts by weight, then the melt moldability of the resin composition may lower and, in addition, the mechanical properties of the container body may also lower. More preferably, the content of the carbon fibers (E) is at most 40 parts by weight, even more preferably at most 20 parts by weight.

As a conductive filler, carbon black may be used in place of carbon fibers (E). In this case, the melt flowability of the resin composition containing carbon black does not lower so much, not like that containing carbon fibers (E), and therefore carbon-black is useful from the viewpoint of the moldability of the composition. However, as compared with carbon fibers (E), carbon black is not so effective for increasing the hardness of the shaped article, for reducing the surface friction resistance thereof and for improving the abrasion resistance thereof, and therefore, in general, carbon fibers (E) are favorable. In addition, carbon black forms particles, and is therefore disadvantageous in that it is easy to cause dust formation with scratches.

In addition to the antistatic agent as above, the resin composition may further contain heat-resistant stabilizer, weather-resistant stabilizer, slipping agent, antiblocking agent, antifogging agent, lubricant, dye, pigment, natural oil, synthetic oil, wax, organic or inorganic filler. However, in consideration of the fact that the shaped article for clean rooms dislikes release of volatile ingredients and soluble ingredients and dislikes generation of particles, it is desirable that the amount of these additives is limited to the lowermost level.

A method for producing the resin composition that is for use for the shaped article for clean rooms of the invention is described below. The resin composition may be obtained by melt-kneading a cyclic olefin polymer (A), a flexible copolymer (B) and a radical initiator (C). The cyclic olefin polymer (A) and the flexible copolymer (B) are melt-kneaded at a temperature at which the radical initiator (C) decomposes, and the two may be thereby crosslinked to give a resin composition of good abrasion resistance. In this stage, it is desirable that a polyfunctional compound (D) is added to the system along with the radical initiator (C), and the crosslinking reaction may be attained more effectively.

In blending them, all these starting ingredients may be mixed at a time, but preferred is a method of previously melt-kneading a cyclic olefin polymer (A) and a flexible copolymer (B), then adding a radical initiator (C) thereto and further melt-kneading them. This is because the crosslinking reaction is preferably started at the stage when the cyclic olefin polymer (A) and the flexible copolymer (B) have been fully blended and it gives a resin composition of good dispersibility.

When a cyclic olefin polymer (A), a flexible copolymer (B) and a radical initiator (C) are melt-kneaded, then the melt viscosity of the resulting resin composition may increase owing to the advanced crosslinking reaction. Therefore, this may cause a problem when a molding method that requires high-level melt flowability is employed. For example, when a resin composition is injection-molded at a high speed, or when a large-size shaped article is produced through injection molding, or when a shaped article that requires severe dimensional accuracy is produced through injection molding, then good shaped articles could not be obtained as the case may be.

In these cases, it is desirable that the cyclic olefin polymer (A) is added to the system separately two times. Specifically, preferred is a method of previously melt-kneading a part of a cyclic olefin polymer (A) and a flexible copolymer (B), then adding a radical initiator (C) thereto and melt-kneading them, and subsequently adding the remaining cyclic olefin polymer (A) thereto and melt-kneading them. In this, the mixture of the crosslinked structure-having cyclic olefin polymer (A) and the flexible copolymer (B) may be diluted with the cyclic olefin polymer (A) not having a crosslinked structure, and the melt viscosity of the resin composition may be prevented from increasing. The resin composition produced according to the method may have sufficiently improved abrasion resistance. Not specifically defined, the ratio of the amount of the cyclic olefin polymer (A) to be added previously to the amount thereof to be added later (previous addition/later addition) is preferably from 1/99 to 70/30. If the ratio (previous addition/later addition) is smaller than 1/99, then the abrasion resistance of the resin composition may lower. More preferably, the ratio is at least 5/95. On the other hand, if the ratio (previous addition/later addition) is larger than 70/30, then the effect of preventing the increase in the melt viscosity of the resin composition may lower. More preferably, the ratio is at least 50/50.

In addition to the above-mentioned starting materials, carbon fibers (E) are also preferably melt-kneaded with them. In this case, carbon fibers (E) may be added to the system anytime, not specifically defined. When a cyclic olefin polymer (A), a flexible copolymer (B) and a radical polymerization initiator (C) are mixed, carbon fibers (E) may be simultaneously added thereto. However, it is desirable that carbon fibers (E) are added thereto after the three components of cyclic olefin polymer (A), flexible copolymer (B) and radical polymerization initiator (C) are previously melt-kneaded, because the dispersibility of the individual components may be better and the physical properties such as moldability, abrasion resistance and mechanical strength of the resin composition may be better. In this case, when the cyclic olefin polymer (A) is added to the system separately two times in the manner mentioned above, then carbon fibers (E) may be added thereto along with the latter part of the cyclic olefin polymer (A) to be added thereto, or may be added thereto still after it. The same shall apply to any other filler than carbon fibers (E) to be added to the system.

The cyclic olefin polymer (A), the flexible copolymer (B) and the radical initiator (C) may be melt-kneaded at any temperature at which the cyclic olefin polymer (A) and the flexible copolymer (B) can melt and the radical initiator (C) can decompose. Concretely, the temperature is preferably from 150 to 350°C. For more efficiently promoting the crosslinking reaction, the kneading temperature is preferably not lower than 200°C. For preventing any excess thermal decomposition of the resin, the kneading temperature is preferably not higher than 300°C. It is desirable to use a radical initiator (C) having a half-value period of not longer than 1 minute at the kneading temperature.

The apparatus for melt-kneading is not specifically defined. Various melt-kneading apparatus may be used herein, including, for example, a single-screw extruder, a twin-screw extruder, a roll, a Banbury mixer. Above all, preferably used is an extruder, especially a multi-screw extruder such as twin-screw extruder that enables sufficient kneading. When an extruder is used, it is desirable that not only a regular screw but also a kneading disc or a reverse screw is disposed therein to improve the kneading power thereof. Thus melt-kneaded, the resin composition may be directly molded as it is, or may be once pelletized and then melt-kneaded.

When the cyclic olefin polymer (A), the flexible copolymer (B) and the radical initiator (C) are reacted, then generation of decomposition products derived from the radical initiator and the resin is inevitable. Some of these decomposition products are volatile, and in consideration of the contamination resistance of the shaped articles, it is desirable to effectively remove them. Accordingly, when the cyclic olefin polymer (A), the flexible copolymer (B) and the radical initiator (C) are melt-kneaded, then it is desirable to use an extruder having a vent. In that manner, the volatile components may be removed through the vent. The type of the vent is not specifically defined. It maybe a vent open to the air, but a pressure-reducing vent is preferably used for more efficiently removing the volatile components. In this case, when a multi-screw extruder such as twin-screw extruder is used, then it enables sufficient kneading and improves the efficiency of removing volatile components.

Preferably, the time for which the melt after addition of a radical initiator (C) thereto stays in the extruder is from 30 to 1800 seconds. The time means an overall time after the addition of a radical initiator (C) to the system and before the production of a shaped article, for which a resin composition stays in the extruder having a vent. Accordingly, when two extruders are used, then the time is a total of the residence time of the two. On the other hand, when one extruder is used and a radical initiator (C) is added thereto during the kneading process therein, then the time means the residence time taken to pass through the downstream zone after the addition. The residence time may be calculated by dividing the inner capacity of the extruder used by the injection speed. If the residence time is too short, then the removal of volatile components may be unsatisfactory; the time is more preferably 60 seconds or longer, even more preferably 120 seconds or longer. If the residence time is too long, then the production efficiency may lower; the time is preferably not longer than 1500 seconds, even more preferably not longer than 1200 seconds.

Preferably, MFR (as measured at 230°C and under a load of 2.16 kg according to ASTM D1238) of the resin composition thus obtained is from 0.01 to 100 g/10 min. If MFR thereof is lower than 0.01 g/10 min, then the resin composition may be difficult to be melt-molded, especially to be injection-molded. More preferably, MFR is at least 0.02 g/10 min, even more preferably at least 0.05 g/10 min. On the other hand, if MFR is higher than 100 g/10 min, then the strength and the abrasion resistance of the shaped article may lower. More preferably, MFR is at least 80 g/10 min, even more preferably at least 60 g/10 min.

The resin composition is melt-molded to produce a shaped article for clean rooms of the invention. The molding method is not specifically defined, for which, however, preferred is injection-molding. The injection-molding condition is not specifically defined. For example, the following condition is preferred.

Cylinder Set Temperature:
180 to 340°C, more preferably 200 to 320°C.
Maximum Injection Speed:
100 to 240 ml/sec, more preferably 120 to 180 ml/sec.
Injection set Pressure:
100 to 250 MPa, more preferably 150 to 220 MPa.
Mold Temperature:
30 to 140°C, more preferably 30 to 80°C.

The injection speed (ml/sec) is a value obtained by multiplying the injection set speed of a screw by the cross section of the screw. The injection speed may be often varied during injection operations, and in the invention, the maximum value of the injection speed in one injection operation is referred to as a maximum injection speed (ml/sec). Shaped articles for clean rooms have a complicated three-dimensional profile and require dimensional accuracy, and, in addition, many of them have a relatively large size. Accordingly, shaped articles are preferably injection-molded at a maximum injection speed over a certain level. On the other hand, when the maximum injection speed is too high, then the resin may decompose owing to the shear heat thereof and enough care must be taken for it.

Preferably, the overall gas release from the shaped article of the invention when heated at 150°C for 30 minutes is at most 20 µg/g in terms of hexadecane. The small gas release ensures the contamination resistance of the shaped article when used in clean rooms. The overall gas release is more preferably at most 15 µg/g, even more preferably at most 10 µg/g.

Preferably, the surface resistivity of the shaped article is from 10² to 10¹² Ω/square. The surface resistivity of at most 10¹² Ω/square ensures prevention of particle adhesion to the shaped article. More preferably, it is at most 10¹⁰ Ω/square.

Also preferably, the Rockwell hardness of the surface of the shaped article is from 90 to 125 (unit, R scale). Having such a high hardness, the shaped article could be a container body of good abrasion resistance. More preferably, it is at least 100. In order to make the shaped article have such a high hardness, carbon fibers (E) may be added to it. On the other hand, however, if the hardness thereof is too high, then the shaped article may scratch or break the matter contained therein. The Rockwell hardness as referred to in this invention is a value (R scale) measured at 23°C according to ASTM D785.

Not specifically defined, the shaped article for clean rooms of the invention may be any and every one used in clean rooms. It includes, for example, containers, trays and tools for handling materials, intermediate products and final products in clean rooms.

One preferred embodiment is a container for a plate-like body selected from a semiconductor substrate, a display substrate and a recording medium substrate. The plate-like body as referred to herein includes not only large-size ones but also chips obtained by cutting them. Of such plate-like bodies, a container for semiconductor substrates that require handling under severely-controlled management is a preferred embodiment of the invention. The container may be in direct contact with the plate-like body therein, or may contain another container that is in direct contact with the plate-like body therein.

Another preferred embodiment is a tool for handling a material, an intermediate product or a finished product. The tool of the type is often in direct contact with a material, an intermediate product or a finished product, and therefore the application of the shaped product of the invention to it is greatly advantageous. The tool includes, for example, tweezers. The matter to be handled by the tool is not specifically defined. The tool may be used for handling articles of various shapes, such as plate-like bodies, blocks, containers. Above all, the shaped article of the invention is favorable to a tool for handling plate-like bodies selected from semiconductor substrates, display substrates and recording medium substrates. Most preferably, it is favorable to a tool for semiconductor substrates that require handling under severely-controlled management.

The semiconductor substrate includes substrates for production of integrated circuits, and substrates for production of solar cells. Its material is typically silicon, but is not specifically defined. Its shape may be circular like that of silicon wafers, but may be square like that of solar cells. In addition, it may also be chips cut out of silicon wafers.

Above all, one typical embodiment is a container for silicon wafers. The container for clean rooms of the invention that releases little gas and generates few particles is favorable for casing silicon wafers. The size of silicon wafers is enlarging these days, and the size of the container for such silicon wafers is also enlarging. Accordingly, with upsizing thereof, the shaped articles shall require higher-level dimensional accuracy as a whole, and the containers for clean rooms of the invention that may be shaped with good dimensional accuracy are favorable to them.

In the case of a container referred to as a carrier in which silicon wafers are directly aligned, then the silicon wafers are in direct contact with the carrier, contamination is especially problematic. In addition, there may occur cross-contamination via a processing solution used. Accordingly, the shaped article for clean rooms of the invention is favorable for the carrier of the type. In addition, the shaped article for clean rooms of the invention is also favorable to a container, or that is, a case or a box where the carrier is cased therein, as well as to an integrated container that serves both as a carrier and as a case.

Examples of the display substrate are a substrate for production of liquid-crystal displays, a substrate for production of plasma displays, and a substrate for production of electroluminescent (EL) displays. The substrate material is typically glass, but may be any others, for example, a transparent resin. Contamination resistance is important for these display substrates, and using the shaped article for clean rooms of the invention for them is favorable. There are many large-size display substrates, and using the shaped article for clean rooms of the invention that has good dimensional accuracy for them is favorable.

Examples of the recording medium substrate are hard disc substrates and optical disc substrates. The material of hard disc substrates is typically metal or glass, but is not limited thereto. The material of optical disc substrates is typically a transparent plastic such as typically polycarbonate, but is not limited thereto. In these recording media, the composition of the recording film varies depending on the recording form thereof. With the recent striking improvement in the recording density in these media, even a minor contaminant may have a significant influence on the properties of the recording media, and the shaped article for clean rooms of the invention is favorably used for the substrates.

### EXAMPLES

The invention is described in more detail with reference to the following Examples. In the Examples, samples were analyzed and evaluated according to the methods mentioned below.

### (1) Glass Transition Temperature:

A sample is heated at a heating speed of 10°C/min and its DSC curve is drawn. At around the glass transition temperature on the curve, an inflection point appears to give a step-like temperature profile. In this, the point at which the straight line that is at the same distance in the vertical direction from the extended line from each base line crosses the DSC curve is referred to as an intermediate glass transition temperature. The point at which the straight line extended from the base line on the low-temperature side to the high-temperature side crosses the tangential line drawn to the maximum inclination point of the step-like temperature profile of the curve is referred to as a glass transition-starting temperature. The point at which the straight line extended from the base line on the high-temperature side to the low-temperature side crosses the tangential line drawn to the maximum inclination point of the step-like temperature profile of the curve is referred to as a glass transition-ending temperature. In this, the glass transition-starting temperature is used as a glass transition temperature.

### (2) Overall Gas Release:

An injection-molded disc sample having a diameter of 150 mm is previously washed. The washing operation is as follows: The sample is brush-washed with a solution prepared by dissolving a surfactant in pure water, then dipped three times in ultra-pure water, and dewatered and dried. The dried sample is cut into strips. About 0.1 g of the strips are put into a test tube and heated at 150°C for 30 minutes, whereupon the released gas is collected at -40°C and introduced on line into a gas chromatography device to determine the overall gas release from the sample. The overall gas release is computed, as converted in terms of hexadecane. For the released gas collection, used is a Curry point purge-and-trap sampler "Model JHS-100A" manufactured by Nippon Bunseki Kogyo KK. For the analysis and quantification, used are gas chromatography/mass spectrometry analyzers (GC/MS analyzers) "Model GC-14A" and "Model QP1100EX" manufactured by Shimadzu Seisakusho. A hexadecane solution having a known concentration is analyzed under the same condition (heating at 150°C for 30 minutes, collecting at -40°C, and GC/MS analysis), and based on the peak area thereof, the hexadecane-converted amount of the gas released from the sample is obtained.

### (3) Taber's Abrasion Amount:

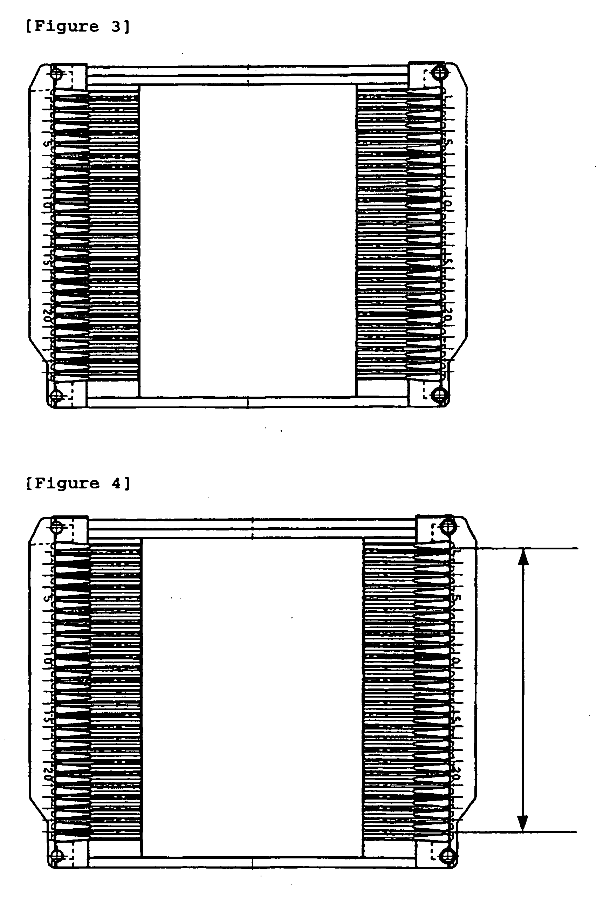

The abrasion amount of a sample is determined according to JIS K7204. The abrasion tester is manufactured by Toyo Tester Kogyo; the abrasion ring is CS17; the load is 1000 g (each arm 500 g); the number of rotation is 1000. When the resin composition contains carbon fibers or a hydrophilic polymer, an injection-molded disc sample having a diameter of 150 mm is prepared and tested. When the resin composition contains neither carbon fibers nor a hydrophilic polymer, a rectangular injection-molded sample having a length of 130 mm, a width of 120 mm and a thickness of 2 mm is prepared and tested. In the Comparative Examples where commercially-available wafer carriers are analyzed, a flat part is cut out of the "U-curved part" of each sample and tested. The "U-curved part" as referred to herein is the wall part formed vertically on this side in Fig. 3.

### (4) Silicon Wafer Scratch Abrasion Resistance:

An injection-molded disc sample having a diameter of 150 mm is left at room temperature for 24 hours, and then tested. The disc sample is kept in contact with the outer periphery of a silicon wafer having a diameter of 200 mm, and a load of 500 g is applied thereto; and in that condition, the sample is slid back and forth against the silicon wafer for a distance of 30 mm at a sliding speed of 50 cycles/min. The sliding direction is vertical to the wafer face, and the wafer face and the test face of the disc sample are kept vertical to each other; and in that condition, the sample is kept slid for 2 hours. The silicon wafer is an 8-inches wafer manufactured by Wacker NSCE (thickness, 725 ± 25 µm). The test apparatus is an abrasion tester "NUS-IS03" manufactured by Suga Shikenki. After the test, the degree of abrasion is visually evaluated according to the criteria mentioned below. In the Comparative Examples where commercially-available wafer carriers are analyzed, a flat part is cut out of the "U-curved part" of each sample and tested.
1 point: Much abrasion dust adhered both to the wafer edge and the disc sample.
2 to 5 points: Evaluated as intermediate between 1 point and 6 points. The larger points indicate better abrasion resistance.
6 points: No abrasion dust found both on the wafer edge and on the disc sample.

### (5) Surface Resistivity:

An injection-molded disc sample having a diameter of 50 mm is left at room temperature for 24 hours, then conditioned at 23°C and at a humidity of 50 % RH for at least 6 hours, and tested. First, 100 V is applied to the sample, using a resistor "Super Megohmmeter SM-8220" manufactured by Toa Denpa Kogyo. A copper plate having a thickness of 0.1 ± 0.02 mm and a size of 10 mm x 10 mm is put between the positive electrode terminal and the disc surface and between the negative electrode terminal and the disc surface, and the distance between the two copper plates is 10 mm. The resistance of the copper plate used herein is much smaller than that of the disc sample, and the former is negligible. When the surface resistivity value of the sample thus tested is smaller than the detection limit (5 × 10⁵ Ω/square), then a high-resistance meter "R8340" manufactured by Advantest is used and the surface resistivity of the sample is again determined at an application voltage of 1 V thereto according to ASTM D257. In the Comparative Examples where commercially-available wafer carriers are analyzed, a flat part is cut out of the "U-curved part" of each sample and tested.

### (6) Dimensional Accuracy:

A wafer carrier sample produced by injection-molding is left at room temperature for 24 hours, and then conditioned at 23°C and at a humidity of 50 % RH for at least 6 hours. Thus conditioned, the size (mm) of the part of the sample as indicted in Fig. 4 is analyzed, using an image analyzer. The image analyzer is an automatic wafer carrier appearance tester "Model CV-9800" manufactured by August Technology. Five wafer carrier samples of the same composition were analyzed. The absolute value between each test value and the mean value of the five test data is obtained, and the maximum value indicates the dimensional fluctuation (mm) of the samples.

### Example 1:

Materials (A) to (E) used in this Example are as follows:

### Cyclic Olefin Polymer (A):

Random copolymer of ethylene and tetracyclo[4.4.0.1^{2,5}.1^{7,10}]-3-dodecene (hereinafter it may be abbreviated to "TCD-3"). As measured through ¹³C-NMR, its ethylene content is 62 mol%; as measured in decalin at 135°C, its intrinsic viscosity [η] is 0.60 dl/g; and its glass transition temperature (Tg) is 105°C. As measured at 230°C, its MFR (under a load of 2.16 kg according to ASTM D1238) is 8.2 g/10 min. The structural formula of TCD-3 is shown below.

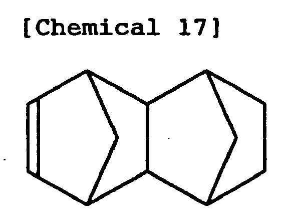

### Flexible Copolymer (B):

Ethylene/propylene random copolymer "P-0880" manufactured by Mitsui Kagaku. Its ethylene content is 80 mol%; its glass transition temperature (Tg) is -54°C; its MFR (as measured at 230°C and under a load of 2.16 kg according to ASTM D1238) is 0.4 g/10 min; its [η] is 2.5 dl/g; its density is 0.867 g/cm³; and its degree of crystallinity as measured through X-ray diffractiometry is about 10 %.

### Radial Initiator (C):

"Perhexyne 25B" manufactured by Nippon Yushi. Its main ingredient (at least 90 %) is 2,5-dimethyl-2,5-bis(t-butylperoxy)hexyne-3. Its temperature at which the half-value period becomes one minute is 194.3°C.

### Polyfunctional Compound (D):

Divinylbenzene.

### Carbon Fibers (E):

PAN-type carbon fibers "Besfight HTA-C6-UAL1" manufactured by Toho Tenax. They are chopped strands having a fiber diameter of 7 µm and a length of 6 mm, and having a volume intrinsic resistivity of 10⁻³ Ω·cm.

2 kg of ethylene/TCD-3 random copolymer pellets and 2 kg of ethylene/propylene random copolymer pellets were well mixed, thenmelt-blendedinatwin-screwextruder ("PCM45" manufactured by Ikegai Tekko) at a cylinder temperature of 220°C, and then pelletized through a pelletizer into pellets (a).

The twin-screw extruder used herein has L/D of 42, and has a vent at two sites, at around the center and the tip of the cylinder. The two vents are both open to the air. The screw constitution is mainly a regular screw, but before and after the vent at around the center, a kneading disc is disposed. The mean residence time for which the fed resin stays in the extruder until it is extruded out is about 3 minutes.

To 4 kg of the above pellets (a), added were 4 g of "Perhexyne 25B" and 4 g of divinylbenzene, and well mixed. The mixture was put into the above-mentioned twin-screw extruder, "PCM 45" (cylinder temperature, 230°C), and melt-kneaded and reacted, and then pelletized through a pelletizer into pellets (b).

4 kg of the above pellets (b) and 16 kg of ethylene/TCD-3 random copolymer pellets were well mixed, then melt-blended in the above-mentioned twin-screw extruder "PCM 45" at a cylinder temperature 220°C, and pelletized through a pelletizer into pellets (c). Thus obtained, the pellets (c) hadMFR, as measured at 230°C (under a load of 2.16 kg according to ASTM D1238), of 4 g/10 min. The deflection temperature under load thereof, as measured under a load of 1.82 MPa according to ASTM D648, was 94°C.

The above pellets (c) and PAN-type carbon fibers "Besfight HTA-C6-UAL1" were fed into a twin-screw extruder manufactured by Plastic Kogaku Kenkyujo, in a ratio by weight (pellets (c)/carbon fibers) of 90/10, and melt-kneaded therein. The twin-screw extruder used herein is a intermeshed co-rotating twin-screw extruder, having a screw diameter of 35 mm and L/D of 35.

The extruder is composed of parts C1, C2, C3, C4, C5, H and D from the motor side, and the temperature of each part is controlled by independent heaters. The C1 part has a supply port for resin composition pellets; the C3 parts has a supply port for carbon fibers; and the area covering the C4 and C5 parts has a vent hole. The supply port for resin composition pellets and the supply port for carbon fibers are open to the air. The vent hole is connected with a vacuum pump, through which the extruder is forcedly degassed by pressure reduction.

The screw is a prefabricated segment-type screw, and the screw constitution is as follows: A regular screw having a length of 127.5 mm is positioned in the part C1. In the part C2, a regular screw having a length of 120 mm, a kneading disc having a length of 85 mm and a regular screw having a length of 72.5 mm are positioned in that order. In the part C3, a regular screw having a length of 205 mm and a kneading disc having a length of 42.5 mm are positioned in that order. In the part C4, a reverse screw having a length of 85 mm and a regular screw having a length of 180 mm are positioned in that order. In the part C5, a regular screw having a length of 212.5 mm is positioned. In the part H, a reverse screw having a length of 10 mm and a regular screw having a length of 42.5 mm are positioned in that order.

The pellets (c) were fed into the extruder through the resin composition pellets supply port in the part C1; and PAN-type carbon fibers were added thereto through the carbon fibers supply port in the part C3, using a loss-in-weight feeder. The cylinder temperature was set at 250°C, at which these were melt-kneaded at a screw revolution of about 200 rpm. In this stage, the extruder was forcedly degassed under a reduced pressure lower than the atmospheric pressure by 0.06 MPa, via the vent hole positioned at the boundary between the part C4 and the part C5, using a vacuum pump. The residence time of the resin in the extruder was about 3 minutes. The resin thus extruded out from the extruder is cooled with water, and the resulting strand was cut with a pelletizer into pellets (d).

Thus obtained, the pellets (d) are of a mixture prepared by melt-kneading 100 parts by weight of the cyclic olefin polymer (A), 11 parts by weight of the flexible copolymer (b), 0.022 parts by weight of the radical initiator (C), 0.022 parts by weight of the polyfunctional compound (D) and 12 parts by weight of the carbon fibers (E). Of 100 parts by weight of the cyclic olefin polymer (A), 11 parts by weight thereof was previously melt-kneaded, and 89 parts by weight thereof was added and kneaded later. MFR of the pellets (d) (as measured at 230°C and under a load of 2.16 kg according to ASTM D1238) was 1.7 g/10 min.

The pellets (d) were fed into an injection-molding machine "Nestal P204/100" manufactured by Sumitomo Jukikai Kogyo, and molded at a resin temperature of 240°C, at a mold temperature of 70°C and under a mold clamping force of 100 tons, into circular test pieces having a diameter of 50 mm and a thickness of 3 mm and into rectangular test pieces having a length of 125 mm, a width of 13 mm and a thickness of 3 mm. Five of these circular test pieces were tested for their surface resistivity, and they all had from 10³ to 10⁵ Ω/square. The circular test pieces were tested for their Rockwell hardness according to ASTM D785, and their hardness, R-scale was 107. Five of the rectangular test pieces were tested for their flexural modulus according to ASTM D790, and they had 4900 MPa on average. These results are all shown in Table 1.

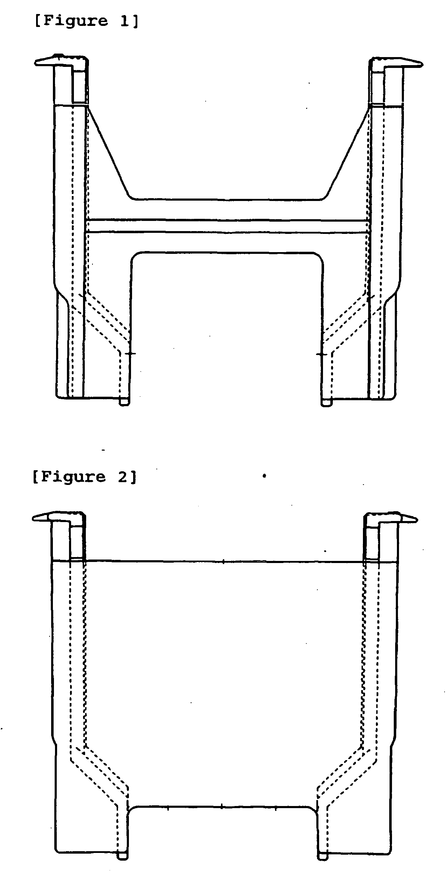

The pellets (d) were fed into an injection-molding machine "J450E-C5" manufactured by Nippon Seiko-sho, and molded into 200-mm wafer carriers shown in Figs. 1 to 3. In addition, disc samples having a diameter of 150 mm and a thickness of 30 mm were also molded in the same manner as above. The screw diameter of the injection-molding machine is 76 mm. Themolding condition is as follows:
Cylinder Set Temperature: 260°C,
Mold Set Temperature: 30°C,
Screw Maximum Injection Set Speed: 31 mm/sec,
(resin composition maximum injection speed: 141 ml/sec),
Injection Set Pressure: 200 MPa.

According to the methods mentioned above, the molded articles were tested for the overall gas release, the Taber's abrasion amount, the silicon wafer scratch abrasion resistance and the dimensional accuracy. The results are all shown in Table 1.

### Example 2:

The pellets (c) produced in Example 1 were injection-molded in the same manner as in Example 1, and tested for the overall gas release, the Taber's abrasion amount, the silicon wafer scratch abrasion resistance and the surface resistivity. The results are all shown in Table 1.

### Example 3:

In Example 1, only the pellets (c) not along with carbon fibers were fed into the twin-screw extruder manufactured by Plastic Kogaku Kenkyujo and melt-kneaded therein with forcedly degassing the extruder, in place of feeding both the pellets (c) and the carbon fibers thereinto and melt-kneading them, and pellets (e) were thus obtained. The blend ratio of the materials for the pellets (e) is the same as that for the pellets (c). The pellets (e) were injection-molded in the same manner as in Example 1, and the molded articles were tested for the overall gas release and the surface resistivity. The results are shown in Table 1.

### Example 4:

18 kg of ethylene/TCD-3 random copolymer pellets and 2 kg of ethylene/propylene random copolymer pellets were well mixed, then melt-blended in the same twin-screw extruder ("PCM 45" manufactured by Ikegai Tekko) as in Example 1, at a cylinder - temperature of 220°C, and then pelletized through a pelletizer into pellets (f). MFR (as measured at 230°C under a load of 2.16 kg according to ASTM D1238) of the pellets (f) was 1. 6 g/10 min.

To 20 kg of the above pellets (f), added were 4 g of "Perhexyne 25B" and 4 g of divinylbenzene, and well mixed. The mixture was put into the above-mentioned twin-screw extruder "PCM 45" (cylinder temperature, 230°C), and melt-kneaded and reacted, and then pelletized through a pelletizer into pellets (g). MFR (as measured at 230°C under a load of 2.16 kg according to ASTM D1238) of the pellets (g) was 0.1 g/10 min. The pellets (g) were injection-molded in the same manner as in Example 1, and the molded articles were tested for the Taber's abrasion amount and the surface resistivity. The results are shown in Table 1.

### Comparative Example 1:

The pellets (f) prepared in Example 4 were injection-molded in the same manner as in Example 1, and the molded articles were tested for the Taber's abrasion amount and the surface resistivity. The results are shown in Table 1.

### Comparative Example 2:

Carbon fibers-containing pellets (h) were obtained in the same manner as in Example 1, for which, however, ethylene/TCD-3 random copolymer was used in place of the pellets (c) in Example 1. The pellets (h) were injection-molded in the same manner as in Example 1, and the molded articles were tested for the overall gas release, the Rockwell hardness, the Taber' s abrasion amount, the silicon wafer scratch abrasion resistance, the surface resistivity and the dimensional accuracy. The results are all shown in Table 1.

### Comparative Example 3:

Ethylene/TCD-3 random copolymer was injection-molded in the same manner as in Example 1, and the molded articles were tested for the Taber's abrasion amount and the surface resistivity. The results are all shown in Table 1.

### Comparative Example 4:

Wafer carriers and disc samples were molded in the same manner as in Example 1, for which, however, polybutylene terephthalate (PBT) pellets ("CA7200NX" manufactured by Wintec Polymer) having persistent antistatic property were used as the material in place of the pellets (d) in Example 1. The pellets are of a mixture prepared by blending an antistatic agent of a hydrophilic polymer with polybutylene terephthalate. The molding condition is as follows:
Cylinder Set Temperature: 240°C,
Mold Set Temperature: 50°C,
Screw Maximum Injection Set Speed: 31 mm/sec,
(resin composition maximum injection speed: 141 ml/sec),
Injection Set Pressure: 200 MPa.

According to the methods mentioned above, the molded articles were tested for the Rockwell hardness, the Taber's abrasion amount, the silicon wafer scratch abrasion resistance, the surface resistivity and the dimensional accuracy. The results are all shown in Table 1.

### Comparative Example 5:

Wafer carriers and disc samples were molded in the same manner as in Example 1, for which, however, polypropylene (PP) pellets ("ECXT-396NA" manufactured by Mitsubishi Kagaku) having persistent antistatic property were used as the material in place of the pellets (d) in Example 1. The pellets are of a mixture prepared by blending an antistatic agent of a hydrophilic polymer with polypropylene. The molding condition is as follows:
Cylinder Set Temperature: 210°C,
Mold Set Temperature: 50°C,
Screw Maximum Injection Set Speed: 31 mm/sec,
(resin composition maximum injection speed: 141 ml/sec),
Injection Set Pressure: 200 MPa.

According to the methods mentioned above, the molded articles were tested for the Rockwell hardness, the Taber's abrasion amount, the silicon wafer scratch abrasion resistance, the surface resistivity and the dimensional accuracy. The results are all shown in Table 1.

### Comparative Examples 6 to 8:

Various commercially-available 200-mm wafer carriers mentioned below were obtained, and their "U-curved part" was cut out. According to the methods mentioned above, the samples were tested for the Rockwell hardness, the Taber's abrasion amount, the silicon wafer scratch abrasion resistance, the surface resistivity and the dimensional accuracy. The results are all shown in Table 1.
"KM-839K-A1" manufactured by Miraial (Comparative Example 6): Mixture of PEEK (polyether ether ketone) with carbon powder added thereto.
"KM-854NE-A" manufactured by Miraial (Comparative Example 7): Mixture of PBT (polybutylene terephthalate) with carbon powder added thereto.
"KM-823S-A" manufactured by Miraial (Comparative Example 8): Mixture of PP (polypropylene) with whiskers added thereto.

**[Table 1]**

| | Cyclic Olefin Polymer (A) | | Flexible Copolymer (B) (wt.pt.) | Radical Initiator (C) (wt.pt.) | Poly-functional Compound (D) (wt.pt.) | Carbon Fibers (E) (wt.pt.) | MFR (230°C) (g/10 mln) | Overall Gas Release (µg/g) | Rockwell Hardness (R scale) | Taber's Abrasion Amount (mm³) | Wafer Scratch Abrasion Resistanc e (point) | Surface Resistivity (Ω) | Dimensional Accuracy (mm) |
|---|---|---|---|---|---|---|---|---|---|---|---|---|---|
| | previous addition (wt.pt.) | later addition (wt.pt.) | | | | | | | | | | | |
| Example 1 | 11 | 89 | 11 | 0.022 | 0.022 | 12 | 1.7 | 5.7 | 107 | 4.0 | 6 | 10³ to 10⁵ | 0.01 |
| Example 2 | 11 | 89 | 11 | 0.022 | 0.022 | 0 | 4 | 16.6 | | 9.5 | 2 | >10¹³ | |
| Example 3 | 11 | 89 | 11 | 0.022 | 0.022 | 0¹⁾ | | 3.4 | | | | >10¹³ | |
| Example 4 | 100 | | 11 | 0.022 | 0.022 | 0 | 0.1 | | | 8.4 | | >10¹³ | |
| Comparative Example 1 | 100 | | 11 | 0 | 0 | 0 | 1.6 | | | 21.7 | | >10¹³ | |
| Comparative Example 2 | 100 | | 0 | 0 | 0 | 11 | | 19.0 | 113 | 10.9 | 4 | 10³ to 10⁵ | 0.01 |
| Comparative Example 3 | 100 | | 0 | 0 | 0 | 0 | 8.2 | | | 23.7 | | >10¹³ | |
| Comparative Example 4 | Commercially-available Resin Composition (PBT/hydrophilic polymer) | | | | | | | | 101 | 6.6 | 2 | 10¹¹ to 10¹² to | 0.08 |
| Comparative Example 5 | Commercially-available Resin Composition (PP/hydrophilic polymer) | | | | | | | | 63 | 14.1 | 1 | 10¹⁰ to 10¹¹ to | 0.08 |
| Comparative Example 6 | Commercially-available shaped article (PEEK/CB) | | | | | | | | 122 | 2.3 | 4 | 10³ to 10⁵ | 0.02 |
| Comparative Example 7 | Commercially-available shaped article (PBT/CB) | | | | | | | | | 5.0 | 3 | 10⁸ to 10⁹ | 0.05 |
| Comparative Example 8 | Commercially-available shaped article (PP/whiskers) | | | | | | | | | 19.9 | 5 | 10¹¹ to 10¹² to | |

| | | | | | | | | | | | | | |
|---|---|---|---|---|---|---|---|---|---|---|---|---|---|
| *1) Carbon fibers were not added, but the mixture was melt-kneaded under the same condition as that containing carbon fibers with pressure-reducing degassing alone. | | | | | | | | | | | | | |

As in Table 1, the shaped articles of the invention have good abrasion resistance. For example, as compared with that of Comparative Example 2 where only carbon fibers (E) were added to a cyclic olefin polymer (A), the sample of Example 1 where a flexible copolymer (B), a radical initiator (C) and a polyfunctional compound (D) were further added thereto to thereby introduce a crosslinked structure into the shaped article had a significantly reduced Taber's abrasion amount and had an improved silicon wafer scratch abrasion resistance, and, in addition, as compared with the commercially-available resin compositions and the commercially-available shaped articles of Comparative Examples 4 to 8, the sample of Example 1 was on a high level. As compared with the sample of Comparative Example 1 where only a cyclic olefin polymer (A) and a flexible copolymer (B) were blended, the sample of Example 2 where a radical initiator (C) and a polyfunctional compound (D) were further added thereto to thereby introduce a crosslinked structure into the shaped article had a significantly reduced Taber's abrasion amount. This confirms that not only adding a flexible component to the resin but also introducing a crosslinked structure thereinto is important for improving the abrasion resistance of the shaped article of the resin. Comparing Examples 1 and 2 confirms that the addition of carbon fibers (E) to the resin composition reduces the Taber's abrasion amount of the shaped article. Regarding the silicon wafer scratch resistance of the shaped article, the effect of carbon fibers (E) added to it is remarkable. Therefore, it is understood that using the resin composition that contains carbon fibers (E) added thereto is especially favorable for applications that may be exposed to such abrasion.

On the other hand, it is understood that the sample of Comparative Example 2 where only carbon fibers (E) were added to a cyclic olefin polymer (A) released a certain amount of gas, but it is understood that the gas release from the sample of Example 1 where a flexible copolymer (B), a radical initiator (C) and a polyfunctional compound (D) were further added thereto to promote the crosslinking reaction in the shaped article was significantly reduced. Surprisingly, the gas release from the shaped article reduced though such a low-molecular-weight compound was added to the resin for chemical reaction. This will be because the melt-kneading operation with degassing under pressure reduction may be effective for the gas release reduction. Obviously, as compared with that from the sample of Example 2 where the mixture was melt-kneaded in an extruder having a vent open to the air, the overall gas release from the sample of Example 3 where the mixture was re-kneaded with degassing in vacuum greatly reduced.

The sample of Example 4 where a radical initiator (C) and a polyfunctional compound (D) were added to a melt-kneaded mixture of a cyclic olefin polymer (A) and a flexible copolymer (B) to promote the crosslinking reaction therein had a reduced MFR, and the resin composition may be difficult to be molded in some applications. As opposed to this, the resin composition of Example 2 where the ingredients were previously blended to promote the crosslinking reaction thereof and then diluted with a cyclic olefin polymer (A) had a significantly increased MFR, which confirms that the flowability of the resin composition was significantly improved. The results of Example 1 further confirm that even when carbon fibers (E) were added to it, the resin composition could still have its good flowability. Since they have such good flowability and since the cyclic olefin polymer (A) therein is amorphous, the resin compositions of the invention give shaped articles having better dimensional accuracy than that of the commercially-available products of Comparative Examples 4 to 7.

## Claims

1. Use in a clean room of a shaped article comprising a resin composition preparable by melt-kneading:
100 parts by weight of a cyclic olefin polymer (A) having a glass transition temperature of from 60 to 200°C,
from 1 to 150 parts by weight of a flexible copolymer (B) preparable by polymerizing at least two monomers selected from a group consisting of olefins, dienes and aromatic vinyl-hydrocarbons, and having a glass transition temperature of 0°C or lower, from 0.001 to 1 part by weight of a radical initiator (C), and from 0 to 1 part by weight of a polyfunctional compound (D) having at least two radical-polymerizable functional groups in the molecule.

2. Use as claimed in claim 1, wherein the cyclic olefin polymer (A) is a polymer preparable by polymerizing a cyclic olefin of the following formula [I] or [II]: 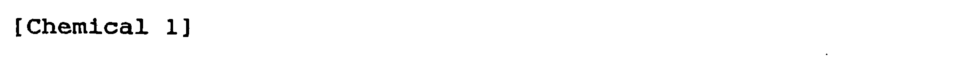 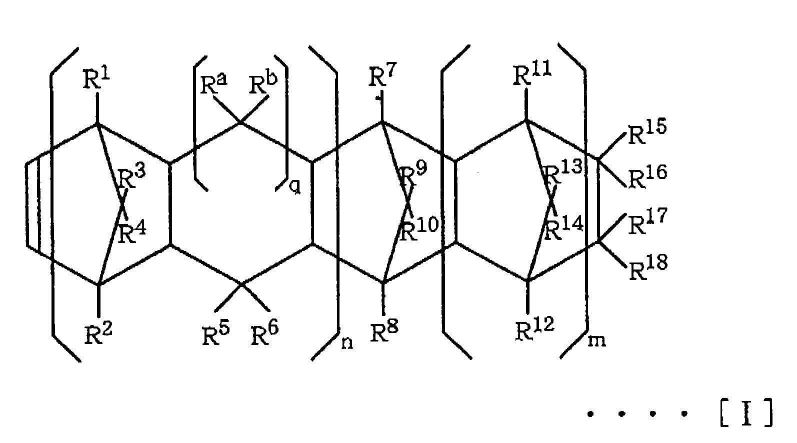 wherein n indicates 0 or 1; m indicates 0 or a positive integer; q indicates 0 or 1; R¹ to R^{1a} and R^{a} and R^{b} each independently represent a hydrogen atom, a halogen atom or a hydrocarbon group; R¹⁵ to R¹⁸ may bond to each other to form a monocyclic or polycyclic structure, and the monocyclic or polycyclic structure may have a double bond; and R¹⁵ and R¹⁶, or R¹⁷ and R¹⁸ may form an alkylidene group. 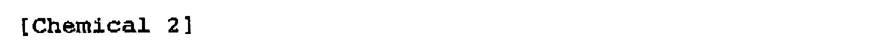 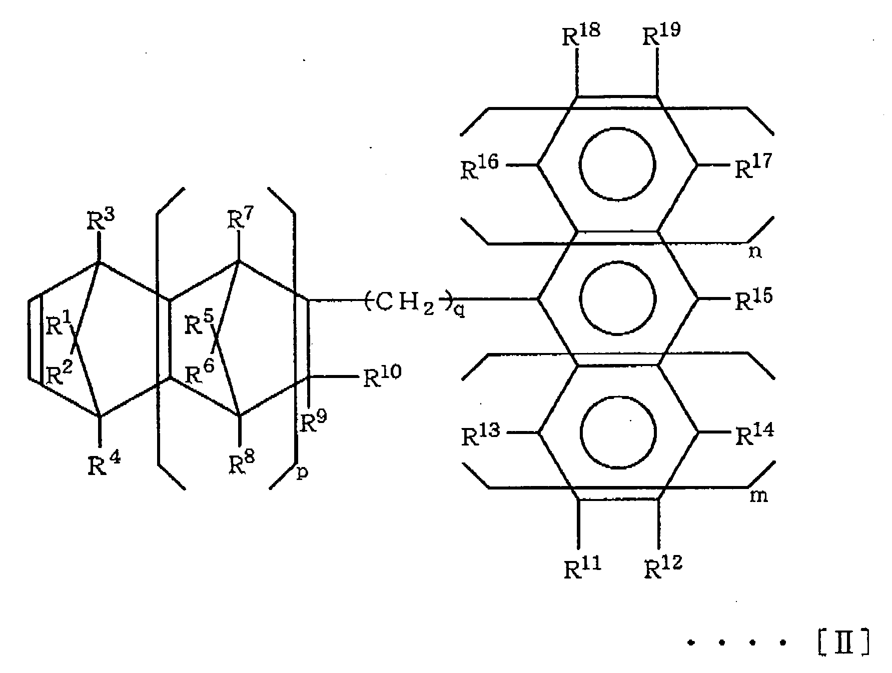 wherein p and q each indicate 0 or an integer of 1 or more; m and n each indicate 0, 1 or 2; R¹ to R¹⁹ each independently represent a hydrogen atom, a halogen atom, an aliphatic hydrocarbon group, an alicyclic hydrocarbon group, an aromatic hydrocarbon group, or an alkoxy group; the carbon atom to which R⁹ (or R¹⁰) bonds, and the carbon atom to which R¹³ or R¹¹ bonds may bond to each other directly or via an alkylene group having from 1 to 3 carbon atoms; and when n = m = 0, R¹⁵ and R¹², or R¹⁵ and R¹⁹ may bond to each other to form amonocyclic or polycyclic aromatic ring.

3. Use as claimed in claim 2, wherein the cyclic olefin polymer (A) is a random copolymer of ethylene and a cyclic olefin of formula [I] or [II].

4. Use as claimed in any of claims 1 to 3, wherein MFR (as measured at 230°C and under a load of 2.16 kg according to ASTM D1238) of the cyclic olefin polymer (A) is from 0.1 to 500 g/10 min.

5. Use as claimed in any of claims 1 to 4, wherein the flexible copolymer (B) is at least one copolymer selected from a group consisting of:
an amorphous or low-crystalline flexible copolymer (b1) preparable by polymerizing at least two monomers selected from a group consisting of ethylene and an α-olefin having from 3 to 20 carbon atoms,
a flexible copolymer (b2) preparable by polymerizing ethylene, an α-olefin having from 3 to 20 carbon atoms, and a cyclic olefin,
a flexible copolymer (b3) preparable by polymerizing a non-conjugated diene, and at least two monomers selected from ethylene and an α-olefin having from 3 to 20 carbon atoms, and
a flexible copolymer (b4) of a random or block copolymer or its hydrogenation product of an aromatic vinyl-hydrocarbon and a conjugated diene.

6. Use as claimed in claim 5, wherein the flexible copolymer (B) is an amorphous or low-crystalline flexible copolymer (b1) preparable by polymerizing at least two monomers selected from a group consisting of ethylene and an α-olefin having from 3 to 20 carbon atoms.

7. Use as claimed in any of claims 1 to 6, wherein the resin composition further contains carbon fibers (E) and their content is from 1 to 100 parts by weight relative to 100 parts by weight of the total of the cyclic olefin polymer (A) and the flexible copolymer (B).

8. Use as claimed in any of claims 1 to 7, wherein MFR (as measured at 230°C and under a load of 2.16 kg according to ASTM D1238) of the resin composition is from 0.01 to 100 g/10 min.

9. Use as claimed in any of claims 1 to 8, wherein the overall amount of gas released from the shaped article under heat at 150°C for 30 minutes is at most 20 µg/g in terms of hexadecane.

10. Use as claimed in any of claims 1 to 9, wherein the shaped article has a surface resistivity of from 10² to 10¹² Ω/square.

11. Use as claimed in any of claims 1 to 10, wherein the shaped article is a container for a plate-like body selected from a semiconductor substrate, a display substrate and a recording medium substrate.

12. Use as claimed in claim 11, wherein the plate-like body is in direct contact with the container.

13. Use as claimed in claim 11, wherein the container is to contain a container that is in direct contact with the plate-like body.

14. Use as claimed in any of claims 1 to 10, wherein the shaped article is a tool for handling a material, an intermediate product or a finished product.

15. A method for producing a shaped article for clean rooms, which comprises melt-kneading:
100 parts by weight of a cyclic olefin polymer (A) having a glass transition temperature of from 60 to 200°C,
from 1 to 150 parts by weight of a flexible copolymer (B) preparable by polymerizing at least two monomers selected from a group consisting of olefins, dienes and aromatic vinyl-hydrocarbons, and having a glass transition temperature of 0°C or lower, from 0.001 to 1 part by weight of a radical initiator (C), and from 1 to 100 parts by weight, relative to 100 parts by weight of the total of the cyclic olefin polymer (A) and the flexible copolymer (B), of carbon fibers (E), and melt-shaping the resulting resin composition.

16. The method for producing a shaped article for clean rooms as claimed in claim 15, wherein a polyfunctional compound (D) having at least two radical-polymerizable functional groups in the molecule is added along with the radical initiator (C).

17. The method for producing a shaped article for clean rooms as claimed in claim 15 or 16, wherein the cyclic olefin polymer (A) and the flexible copolymer (B) are previously melt-kneaded, and then the radical initiator (C) is added thereto and melt-kneaded to obtain the resin composition.

18. The method for producing a shaped article for clean rooms as claimed in claim 17, wherein a part of the cyclic olefin polymer (A) and the flexible copolymer (B) are previously melt-kneaded, then the radical initiator (C) is added thereto and melt-kneaded, and thereafter the remaining cyclic olefin polymer (A) is added and melt-kneaded to obtain the resin composition.

19. The method for producing a shaped article for clean rooms as claimed in any of claims 15 to 18, wherein the temperature in melt-kneading to obtain the resin composition is from 150 to 350°C.

20. The method for producing a shaped article for clean rooms as claimed in any of claims 15 to 19, wherein an extruder having a vent is used for melt-kneading to obtain the resin composition.

21. The method for producing a shaped article for clean rooms as claimed in claim 20, wherein the time for which the melt after addition of the radical initiator (C) thereto stays in the extruder is from 30 to 1800 seconds.

22. The method for producing a shaped article for clean rooms as claimed in any of claims 15 to 21, wherein the resin composition is injection-molded at a maximum injection speed of from 100 to 240 ml/sec.

23. A shaped article for clean rooms comprising a resin composition as defined in any one of claims 1 to 14, wherein said resin composition contains carbon fibers (E) and their content is from 1 to 100 parts by weight relative to 100 parts by weight of the total of the cyclic olefin polymer (A) and the flexible copolymer (B).

24. A shaped article according to claim 23 which is for handling materials, intermediate products or final products in clean rooms and is a container, a tray or a tool.

## Patentansprüche

1. Verwendung eines geformten Gegenstands in einem Reinraum, umfassend eine Harzzusammensetzung, die herstellbar ist durch Schmelzkneten von:
100 Gewichtsteilen eines Cycloolefinpolymers (A), das eine Glasübergangstemperatur von 60 bis 200°C aufweist,
1 bis 150 Gewichtsteilen eines flexiblen Copolymers (B), das durch Polymerisation von mindestens zwei Monomeren herstellbar ist, die aus einer Gruppe bestehend aus Olefinen, Dienen und aromatischen Vinyl-Kohlenwasserstoffen ausgewählt sind, und eine Glasübergangstemperatur von 0°C oder darunter aufweist,
0,001 bis 1 Gewichtsteil eines Radikalinitiators (C) und
0 bis 1 Gewichtsteil einer polyfunktionellen Verbindung (D), die mindestens zwei radikalpolymerisierbare funktionelle Gruppen im Molekül aufweist.

2. Verwendung nach Anspruch 1, wobei das Cycloolefinpolymer (A) ein Polymer ist, das durch Polymerisation eines Cycloolefins der folgenden Formel [I] oder [II] herstellbar ist: 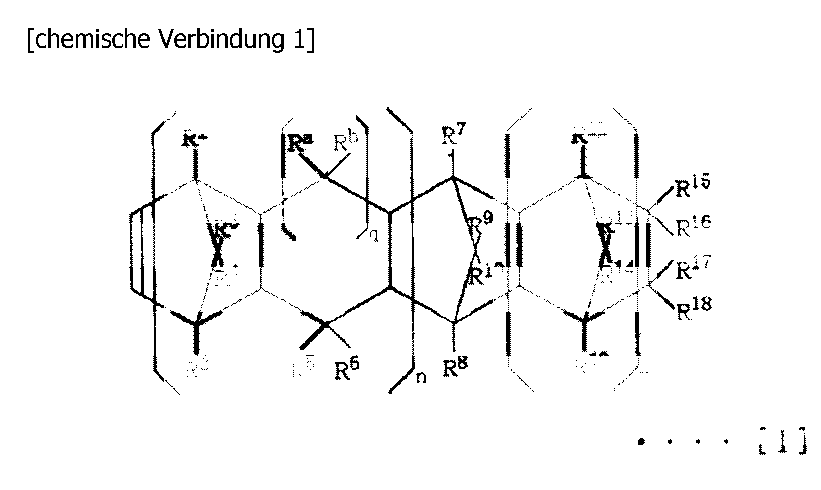 wobei n 0 oder 1 ist; m 0 oder eine positive ganze Zahl ist; q 0 oder 1 ist; R¹ bis R¹⁸ und R^{a} und R^{b} jeweils unabhängig voneinander ein Wasserstoffatom, ein Halogenatom oder eine Kohlenwasserstoffgruppe darstellen; R¹⁵ bis R¹⁸ miteinander eine Bindung eingehen können, um eine monozyklische oder polyzyklische Struktur zu bilden, und die monozyklische oder polyzyklische Struktur eine Doppelbindung aufweisen kann; und R¹⁵ und R¹⁶ oder R¹⁷ und R¹⁸ eine Alkylidengruppe bilden können, 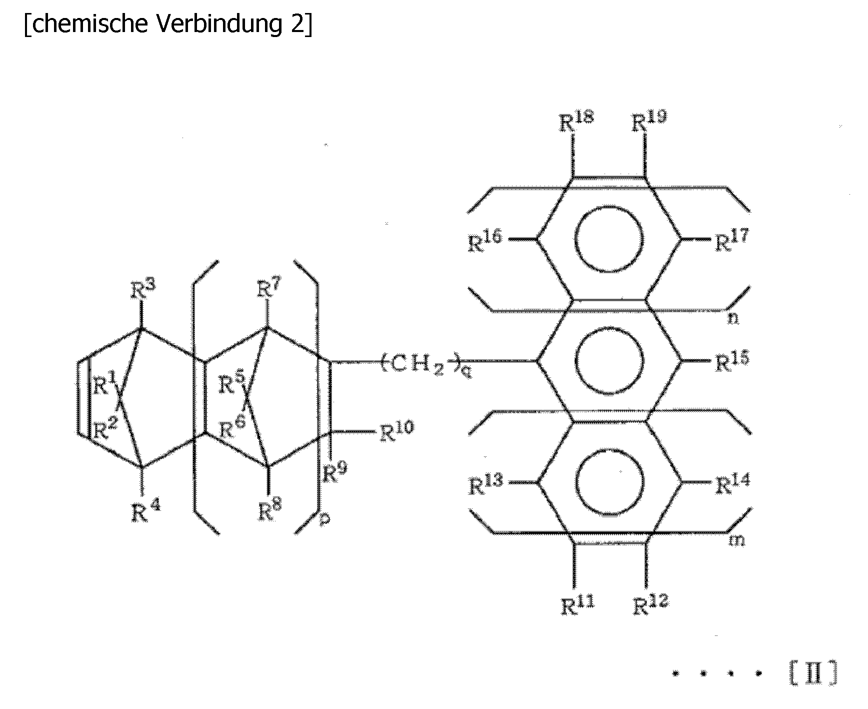 wobei p und q jeweils 0 oder eine ganze Zahl von 1 oder mehr sind; m und n jeweils 0, 1 oder 2 sind; R¹ bis R¹⁹ jeweils unabhängig voneinander ein Wasserstoffatom, ein Halogenatom, eine aliphatische Kohlenwasserstoffgruppe, eine alizyklische Kohlenwasserstoffgruppe, eine aromatische Kohlenwasserstoffgruppe oder eine Alkoxygruppe darstellen; das Kohlenstoffatom, an das R⁹ (oder R¹⁰) bindet, und das Kohlenstoffatom, an das R¹³ oder R¹¹ bindet, direkt oder über eine Alkylengruppe mit 1 bis 3 Kohlenstoffatomen miteinander eine Bindung eingehen können; und wenn n=m=0, R¹⁵ und R¹² oder R¹⁵ und R¹⁹ miteinander eine Bindung eingehen können, um einen monozyklischen oder polyzyklischen aromatischen Ring zu bilden.

3. Verwendung nach Anspruch 2, wobei das Cycloolefinpolymer (A) ein statistisches Copolymer aus Ethylen und einem Cycloolefin der Formel [I] oder [II] ist.

4. Verwendung nach einem der Ansprüche 1 bis 3, wobei die Schmelzflussrate (MFR) (gemessen bei 230°C und unter einer Last von 2,16 kg nach ASTM D1238) des Cycloolefinpolymers (A) 0,1 bis 500 g/10 min ist.

5. Verwendung nach einem der Ansprüche 1 bis 4, wobei das flexible Copolymer (B) mindestens ein Copolymer ist, das ausgewählt ist aus der Gruppe bestehend aus:
einem amorphen oder niedrig kristallinen flexiblen Copolymer (b1), das durch Polymerisation von mindestens zwei Monomeren herstellbar ist, die aus einer Gruppe bestehend aus Ethylen und einem α-Olefin mit 3 bis 20 Kohlenstoffatomen ausgewählt sind,
einem flexiblen Copolymer (b2), das durch Polymerisation von Ethylen, einem α-Olefin mit 3 bis 20 Kohlenstoffatomen und einem Cycloolefin herstellbar ist,
einem flexiblen Copolymer (b3), das durch Polymerisation von einem nicht konjugierten Dien und mindestens zwei Monomeren herstellbar ist, die aus Ethylen und einem α-Olefin mit 3 bis 20 Kohlenstoffatomen ausgewählt sind, und
einem flexiblen Copolymer (b4) eines statistischen oder Block-Copolymers oder seinem Hydrierungsprodukt eines aromatischen Vinyl-Kohlenwasserstoffs und eines konjugierten Diens.

6. Verwendung nach Anspruch 5, wobei das flexible Copolymer (B) ein amorphes oder niedrig kristallines flexibles Copolymer (b1) ist, das durch Polymerisation von mindestens zwei Monomeren herstellbar ist, die aus einer Gruppe bestehend aus Ethylen und einem α-Olefin mit 3 bis 20 Kohlenstoffatomen ausgewählt sind.

7. Verwendung nach einem der Ansprüche 1 bis 6, wobei die Harzzusammensetzung weiter Kohlenstofffasern (E) enthält und ihr Gehalt 1 bis 100 Gewichtsteile, bezogen auf 100 Gewichtsteile der Gesamtmenge des Cycloolefinpolymers (A) und des flexiblen Copolymers (B), beträgt.

8. Verwendung nach einem der Ansprüche 1 bis 7, wobei die Schmelzflussrate (MFR) (gemessen bei 230°C und unter einer Last von 2,16 kg nach ASTM D1238) der Harzzusammensetzung 0,01 bis 100 g/10 min beträgt.

9. Verwendung nach einem der Ansprüche 1 bis 8, wobei die Gesamtmenge des aus dem geformten Gegenstand unter Wärme bei 150°C für 30 Minuten freigesetzten Gases höchstens 20 µg/g in Bezug auf Hexadecan beträgt.

10. Verwendung nach einem der Ansprüche 1 bis 9, wobei der geformte Gegenstand einen Oberflächenwiderstand von 10² bis 10¹² Ω/Quadrat aufweist.

11. Verwendung nach einem der Ansprüche 1 bis 10, wobei der geformte Gegenstand ein Behälter für einen plattenförmigen Körper ist, der aus einem Halbleiter-Substrat, einem Anzeige-Substrat und einem Aufzeichnungsmedium-Substrat ausgewählt ist.

12. Verwendung nach Anspruch 11, wobei sich der plattenförmige Körper in direktem Kontakt mit dem Behälter befindet.

13. Verwendung nach Anspruch 11, wobei der Behälter einen Behälter enthalten soll, der sich in direktem Kontakt mit dem plattenförmigen Körper befindet.

14. Verwendung nach einem der Ansprüche 1 bis 10, wobei der geformte Gegenstand ein Werkzeug zum Handhaben eines Materials, eines Zwischenprodukts oder eines Endprodukts ist.

15. Verfahren zur Herstellung eines geformten Gegenstands für Reinräume, umfassend das Schmelzkneten von
100 Gewichtsteilen eines Cycloolefinpolymers (A), das eine Glasübergangstemperatur von 60 bis 200°C aufweist,
1 bis 150 Gewichtsteilen eines flexiblen Copolymers (B), das durch Polymerisation von mindestens zwei Monomeren herstellbar ist, die aus einer Gruppe bestehend aus Olefinen, Dienen und aromatischen Vinyl-Kohlenwasserstoffen ausgewählt sind, und eine Glasübergangstemperatur von 0°C oder darunter hat, 0,001 bis 1 Gewichtsteil eines Radikalinitiators (C) und 1 bis 100 Gewichtsteilen, bezogen auf 100 Gewichtsteile der Gesamtmenge des Cycloolefinpolymers (A) und des flexiblen Copolymers (B), Kohlenstofffasern (E), und das Schmelzformen der sich ergebenden Harzzusammensetzung.

16. Verfahren zur Herstellung eines geformten Gegenstands für Reinräume nach Anspruch 15, wobei eine polyfunktionelle Verbindung (D) mit mindestens zwei radikalpolymerisierbaren funktionellen Gruppen im Molekül zusammen mit dem Radikalinitiator (C) zugegeben wird.

17. Verfahren zur Herstellung eines geformten Gegenstands für Reinräume nach Anspruch 15 oder 16, wobei das Cycloolefinpolymer (A) und das flexible Copolymer (B) zuvor schmelzgeknetet werden und dann der Radikalinitiator (C) zugegeben und schmelzgeknetet wird, um die Harzzusammensetzung zu erhalten.

18. Verfahren zur Herstellung eines geformten Gegenstands für Reinräume nach Anspruch 17, wobei ein Teil des Cycloolefinpolymers (A) und das flexible Copolymer (B) zuvor schmelzgeknetet werden, dann der Radikalinitiator (C) zugegeben und schmelzgeknetet wird und danach das verbleibende Cycloolefinpolymer (A) zugegeben und schmelzgeknetet wird, um die Harzzusammensetzung zu erhalten.

19. Verfahren zur Herstellung eines geformten Gegenstands für Reinräume nach einem der Ansprüche 15 bis 18, wobei die Temperatur beim Schmelzkneten zum Erhalten der Harzzusammensetzung 150 bis 350°C beträgt.

20. Verfahren zur Herstellung eines geformten Gegenstands für Reinräume nach einem der Ansprüche 15 bis 19, wobei ein Extruder mit einer Lüftungsöffnung zum Schmelzkneten verwendet wird, um die Harzzusammensetzung zu erhalten.

21. Verfahren zur Herstellung eines geformten Gegenstands für Reinräume nach Anspruch 20, wobei die Zeit, für die die Schmelze nach der Zugabe des Radikalinitiators (C) dazu im Extruder verbleibt, 30 bis 1800 Sekunden beträgt.

22. Verfahren zur Herstellung eines geformten Gegenstands für Reinräume nach einem der Ansprüche 15 bis 21, wobei die Harzzusammensetzung bei einer maximalen Spritzgeschwindigkeit von 100 bis 240 ml/s spritzgegossen wird.

23. Geformter Gegenstand für Reinräume, umfassend eine Harzzusammensetzung nach einem der Ansprüche 1 bis 14, wobei die Harzzusammensetzung Kohlenstofffasern (E) enthält und ihr Gehalt 1 bis 100 Gewichtsteile, bezogen auf 100 Gewichtsteile der Gesamtmenge des Cycloolefinpolymers (A) und des flexiblen Copolymers (B), beträgt.

24. Geformter Gegenstand nach Anspruch 23, welcher zum Handhaben von Materialien, Zwischenprodukten oder Endprodukten in Reinräumen dient und ein Behälter, eine Schale oder ein Werkzeug ist.

## Revendications

1. Utilisation en salle blanche d'un article façonné comprenant une composition de résine qu'on peut préparer en malaxant à l'état fondu :
100 parties en poids d'un polymère (A) d'oléfine cyclique présentant une température de transition vitreuse de 60 à 200 °C ;
de 1 à 150 parties en poids d'un copolymère souple (B), qu'on peut préparer en faisant polymériser au moins deux monomères choisis dans l'ensemble formé par les oléfines, les diènes et les hydrocarbures vinyl-aromatiques, et qui présente une température de transition vitreuse inférieure ou égale à 0 °C ;
de 0,001 à 1 partie en poids d'un amorceur radicalaire (C) ;
et de 0 à 1 partie en poids d'un composé polyfonctionnel (D) qui com-porte dans sa molécule au moins deux groupes fonctionnels pouvant donner lieu à une polymérisation par voie radicalaire.

2. Utilisation conforme à la revendication 1, dans laquelle le polymère (A) d'oléfine cyclique est un polymère qu'on peut préparer en faisant polymériser une oléfine cyclique de formule suivante [I] ou [II] : 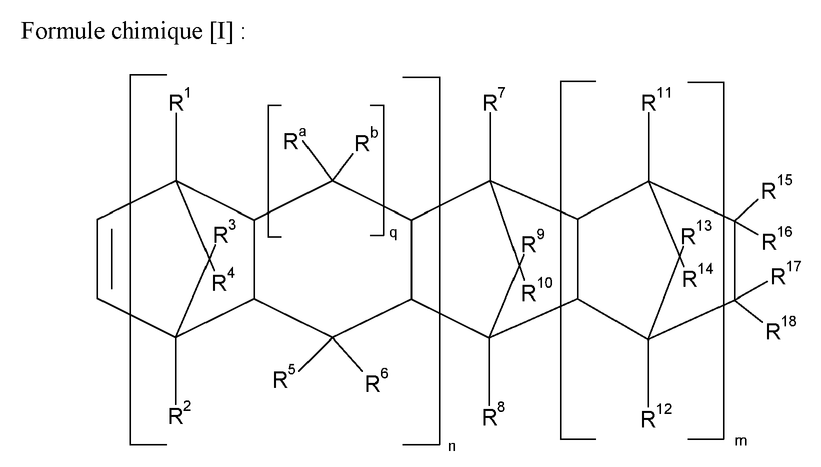 dans laquelle l'indice n vaut 0 ou 1, l'indice m vaut 0 ou est un nombre entier positif, l'indice q vaut 0 ou 1, et les symboles R¹ à R¹⁸, R^{a} et R^{b} représentent chacun, indépendamment, un atome d'hydrogène ou d'halogène ou un groupe hydrocarbyle, étant entendu que les entités représentées par les symboles R¹⁵ à R¹⁸ peuvent être raccordées l'une à l'autre pour former une structure monocyclique ou polycyclique, laquelle structure monocyclique ou polycyclique peut comporter une double liaison, et que les entités représentées par R¹⁵ et R¹⁶, ou par R¹⁷ et R¹⁸, peuvent constituer un groupe alkylidène ; 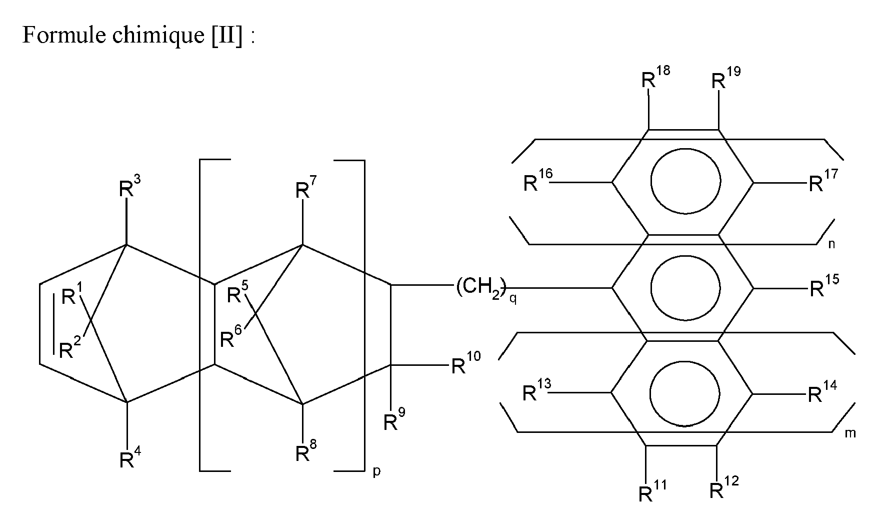 dans laquelle chacun des indices p et q vaut 0 ou est un nombre entier positif, les indices m et n valent chacun 0, 1 ou 2, et les symboles R¹ à R¹⁹ représentent chacun, indépendamment, un atome d'hydrogène ou d'halogène, un groupe hydrocarbyle aliphatique, alicyclique ou aroma-tique, ou un groupe alcoxy, étant entendu que l'atome de carbone au-quel est liée l'entité symbolisée par R⁹ (ou R¹⁰) et l'atome de carbone auquel est liée l'entité symbolisée par R¹³ ou celui auquel est liée l'entité symbolisée par R¹¹ peuvent être raccordés l'un à l'autre par une liaison directe ou par un groupe alcanediyle comportant 1 à 3 atomes de carbone, et que, si les deux indices m et n valent chacun 0, les entités représentées par R¹⁵ et R¹², ou par R¹⁵ et R¹⁹, peuvent être raccordées l'une à l'autre pour former un système aromatique mono-cyclique ou polycyclique.

3. Utilisation conforme à la revendication 2, dans laquelle le polymère (A) d'oléfine cyclique est un copolymère statistique d'éthy-lène et d'une oléfine cyclique de formule [I] ou [II].

4. Utilisation conforme à l'une des revendications 1 à 3, dans laquelle le polymère (A) d'oléfine cyclique présente un indice de fluidité à chaud, mesuré à 230 °C sous une charge de 2,16 kg selon la norme ASTM D-1238, de 0,1 à 500 g/10 min.

5. Utilisation conforme à l'une des revendications 1 à 4, dans laquelle le copolymère souple (B) est au moins un copolymère choisi dans l'ensemble formé par les suivants :
un copolymère souple (b1), amorphe ou faiblement cristallin, que l'on peut préparer en faisant polymériser au moins deux monomères choisis dans l'ensemble formé par l'éthylène et les α-oléfines comportant 3 à 20 atomes de carbone ;
un copolymère souple (b2), qu'on peut préparer en faisant polymériser de l'éthylène, une α-oléfine comportant 3 à 20 atomes de carbone et une oléfine cyclique ;
un copolymère souple (b3), qu'on peut préparer en faisant polymériser un diène non-conjugué et au moins deux monomères choisis dans l'en-semble formé par l'éthylène et les α,-oléfines comportant 3 à 20 atomes de carbone ;
et un copolymère souple (b4), qui est un copolymère, statistique ou à blocs, d'un hydrocarbure vinyl-aromatique et d'un diène conjugué, ou un produit d'hydrogénation d'un tel copolymère.

6. Utilisation conforme à la revendication 5, dans laquelle le copolymère souple (B) est un copolymère souple (b1), amorphe ou fai-blement cristallin, qu'on peut préparer en faisant polymériser au moins deux monomères choisis dans l'ensemble formé par l'éthylène et les α-oléfines comportant 3 à 20 atomes de carbone.

7. Utilisation conforme à l'une des revendications 1 à 6, dans laquelle la composition de résine contient en outre des fibres de car-bone (E), en une proportion de 1 à 100 parties en poids pour 100 parties en poids, au total, du polymère (A) d'oléfine cyclique et du copolymère souple (B).

8. Utilisation conforme à l'une des revendications 1 à 7, dans laquelle la composition de résine présente un indice de fluidité à chaud, mesuré à 230 °C sous une charge de 2,16 kg selon la norme ASTM D-1238, de 0,01 à 100 g/10 min.

9. Utilisation conforme à l'une des revendications 1 à 8, dans laquelle la quantité totale de gaz qui s'échappe de l'article façonné sous l'action de la chaleur, à 150 °C, en un laps de temps de 30 minu-tes vaut au plus 20 µg/g, en hexadécane.

10. Utilisation conforme à l'une des revendications 1 à 9, dans laquelle l'article façonné présente une résistivité de surface de 10² à 10¹² ohms par carré.

11. Utilisation conforme à l'une des revendications 1 à 10, dans laquelle l'article façonné est un récipient pour un corps en forme de plaque, choisi parmi un substrat pour semi-conducteur, un substrat pour afficheur et un substrat pour support d'enregistrement.

12. Utilisation conforme à la revendication 11, dans laquelle le corps en forme de plaque est en contact direct avec le récipient.

13. Utilisation conforme à la revendication 11, dans laquelle le récipient est conçu pour contenir un autre récipient qui est en contact direct avec le corps en forme de plaque.

14. Utilisation conforme à l'une des revendications 1 à 10, dans laquelle l'article façonné est un outil conçu pour manipuler un maté-riau, un produit intermédiaire ou un produit fini.

15. Procédé de production d'un article façonné pour salles blanches, lequel procédé comporte le fait de malaxer à l'état fondu :
100 parties en poids d'un polymère (A) d'oléfine cyclique présentant une température de transition vitreuse de 60 à 200 °C ;
de 1 à 150 parties en poids d'un copolymère souple (B), qu'on peut préparer en faisant polymériser au moins deux monomères choisis dans l'ensemble formé par les oléfines, les diènes et les hydrocarbures vinyl-aromatiques, et qui présente une température de transition vitreuse inférieure ou égale à 0 °C ;
de 0,001 à 1 partie en poids d'un amorceur radicalaire (C) ;
et de 1 à 100 parties en poids pour 100 parties en poids, au total, du polymère (A) d'oléfine cyclique et du copolymère souple (B), de fibres de carbone (E) ;
et le fait de façonner à l'état fondu la composition de résine résultante.

16. Procédé de production d'un article façonné pour salles blanches, conforme à la revendication 15, dans lequel on ajoute, avec l'amorceur radicalaire (C), un composé polyfonctionnel (D) qui com-porte dans sa molécule au moins deux groupes fonctionnels pouvant donner lieu à une polymérisation par voie radicalaire.

17. Procédé de production d'un article façonné pour salles blanches, conforme à la revendication 15 ou 16, dans lequel on malaxe d'abord à l'état fondu le polymère (A) d'oléfine cyclique et le copoly-mère souple (B), puis on y ajoute l'amorceur radicalaire (C) et l'on malaxe le tout à l'état fondu pour en faire la composition de résine.

18. Procédé de production d'un article façonné pour salles blanches, conforme à la revendication 17, dans lequel on malaxe d'abord à l'état fondu une partie du polymère (A) d'oléfine cyclique et le copolymère souple (B), puis on y ajoute l'amorceur radicalaire (C) et l'on malaxe le tout à l'état fondu, et l'on ajoute ensuite le reste du polymère (A) d'oléfine cyclique et l'on malaxe le tout à l'état fondu, pour en faire la composition de résine.

19. Procédé de production d'un article façonné pour salles blanches, conforme à l'une des revendications 15 à 18, dans lequel, dans l'opération de malaxage à l'état fondu qui donne la composition de résine, la température vaut de 150 à 350 °C.

20. Procédé de production d'un article façonné pour salles blanches, conforme à l'une des revendications 15 à 19, dans lequel, pour l'opération de malaxage à l'état fondu qui donne la composition de résine, on utilise une extrudeuse munie d'un évent.

21. Procédé de production d'un article façonné pour salles blanches, conforme à la revendication 20, dans lequel la masse fondue, après qu'on y a ajouté l'amorceur radicalaire (C), reste dans l'extru-deuse pendant un laps de temps de 30 à 1800 secondes.

22. Procédé de production d'un article façonné pour salles blanches, conforme à l'une des revendications 15 à 21, dans lequel la composition de résine subit un moulage par injection, à une vitesse maximale d'injection de 100 à 240 mL/s.

23. Article façonné pour salles blanches, comprenant une com-position de résine définie dans l'une des revendications 1 à 14, dans lequel ladite composition de résine contient des fibres de carbone (E), en une proportion de 1 à 100 parties en poids pour 100 parties en poids, au total, du polymère (A) d'oléfine cyclique et du copolymère souple (B).

24. Article façonné conformé à la revendication 23, qui doit servir à manipuler des matériaux, des produits intermédiaires ou des produits finals dans des salles blanches et qui est un récipient, un plateau ou un outil.
